# EUROPEAN PATENT APPLICATION

(11) **EP 4 738 080 A1**
(43) Date of publication of application: **06.05.2026**
(21) Application number: 24895842.3
(22) Date of filing: 30.08.2024
(51) Int. Cl.: G06F 3/0481

(54) **INTERACTION METHOD, ELECTRONIC DEVICE AND COMPUTER-READABLE STORAGE MEDIUM**

(30) Priority: 28.11.2023 CN 202311615702
(71) Applicant: Huawei Technologies Co., Ltd., Shenzhen, Guangdong 518129 (CN)
(72) Inventor: CHEN, Jiacheng, Shenzhen, Guangdong 518129 (CN); DENG, Yue, Shenzhen, Guangdong 518129 (CN); XU, Jie, Shenzhen, Guangdong 518129 (CN)
(74) Representative: Isarpatent
(86) International application number: PCT/CN2024/116146
(87) International publication number: WO 2025/112741

(57) **Abstract**

This application is applied to the field of terminal technologies, and especially relates to an interaction method, an electronic device, and a computer-readable storage medium. In the method, a current status of a vehicle can be determined when first content needs to be displayed on a display interface of an in-vehicle device based on an interaction instruction of a user. If the current status is a parking state, a first component can be displayed on the display interface of the in-vehicle device, so that the first content is presented on the larger first component when the vehicle is in the parking state, to help the user quickly obtain a large amount of information. If the current status is a driving state, a second component can be displayed on the display interface of the in-vehicle device, so that the first content is presented on the smaller second component when the vehicle is in the driving state, that is, the first content can be presented in a shrunk view, to prevent excessive content from being displayed on the display interface. This avoids affecting driving attention of a driver and improves driving safety.

## Description

This application claims priority to Chinese Patent Application No. 202311615702.6, filed with the China National Intellectual Property Administration on November 28, 2023 and entitled "INTERACTION METHOD, ELECTRONIC DEVICE, AND COMPUTER-READABLE STORAGE MEDIUM", which is incorporated herein by reference in its entirety.

### TECHNICAL FIELD

This application belongs to the field of terminal technologies, and especially relates to an interaction method, an electronic device, and a computer-readable storage medium.

### BACKGROUND

With development of vehicle intelligence, a voice interaction system (also referred to as a voice assistant) is widely applied to vehicles. After waking up the voice assistant by using a specified wake-up word, a user can perform voice interaction with the voice assistant to use a required function. Currently, voice interaction with the voice assistant is primarily based on a streaming word-by-word visual interface. To be specific, during voice interaction, the voice assistant generally returns a large amount of text content for the user to view on a display interface, for example, returns the large amount of text content for the user in a window by displaying the window on the display interface. This manner of returning the large amount of text content in the window is likely to cause a driver to lose concentration, affecting driving safety.

### SUMMARY

Embodiments of this application provide an interaction method, an electronic device, and a computer-readable storage medium, to improve driving safety when content is displayed in a driving state.

According to a first aspect, an embodiment of this application provides an interaction method, including:
determining a current status of a vehicle when obtaining a first interaction instruction of a user; and
displaying a first component on a display interface if the current status is a parking state; or
displaying a second component on the display interface if the current status is a driving state, where
the second component is smaller than the first component, and first content displayed on the first component or the second component is content in response to the first interaction instruction.

In the interaction method provided above, when the first interaction instruction of the user is obtained, the current status of the vehicle can be determined. If the current status is the parking state, the first component can be displayed on a display interface of an in-vehicle device. If the current status is the driving state, the second component can be displayed on a display interface of an in-vehicle device. The second component is smaller than the first component, and the first content displayed on the first component or the second component can be the content in response to the first interaction instruction, so that when the vehicle is in the parking state, the first content can be presented on the larger first component, to help the user quickly obtain a large amount of information. When the vehicle is in the driving state, the first content can be presented on the smaller second component, so that the first content is presented in a shrunk view, to prevent excessive content from being displayed on the display interface. This avoids affecting driving attention of a driver and improves driving safety.

In a possible implementation, displaying the first component on the display interface includes:
determining a first position of the user in the vehicle; and
displaying the first component on the display interface based on the first position.

In the interaction method provided in this implementation, when the current status of the vehicle is the parking state, a user who needs to perform voice interaction with a voice assistant may be determined, and the first component may be displayed at a position close to the user on the display interface. This can facilitate interaction between the user and the first component, help the user view the first content displayed on the first component, enhance efficiency of viewing the first content by the user, and improve user experience.

Optionally, displaying the first component on the display interface based on the first position includes:
displaying the first component on a left side of the display interface when the first position is a driver seat; or
displaying the first component on a right side of the display interface when the first position is not a driver seat.

In the interaction method provided in this implementation, when the current status of the vehicle is the parking state, if it is determined that the user who needs to perform voice interaction with the voice assistant is a user in the driver seat, the first component may be displayed on the left side of the display interface, to facilitate interaction between the user in the driver seat and the first component. If it is determined that the user who needs to perform voice interaction with the voice assistant is not a user in the driver seat, the first component may be displayed on the right side of the display interface, to facilitate interaction between a user in a front passenger seat or another seat and the first component, and reduce impact of display of the first component on the display interface on the user in the driver seat, thereby improving driving safety.

For example, the first position of the user in the vehicle may be determined based on a voice zone corresponding to the first interaction instruction or a voice zone corresponding to a wake-up instruction.

In another possible implementation, displaying the first component on the display interface includes:
determining a second position of a target toolbar on the display interface; and
displaying the first component on the display interface based on the second position, where the first component and the target toolbar do not overlap.

In the interaction method provided in this implementation, when the target toolbar needs to be displayed on the display interface or the target toolbar has been displayed on the display interface, the second position of the target toolbar on the display interface may be determined, and a size of the first component may be adjusted based on the second position of the target toolbar on the display interface, so that the first component and the target toolbar does not overlap, to avoid mutual blocking between the first component and the target toolbar, and improve a display effect.

For example, when the target toolbar needs to be displayed at the bottom of the display interface or has been displayed at the bottom of the display interface, a height of the first component may be adjusted upward, to collapse the first component upward. For example, when the target toolbar needs to be displayed on the top of the display interface or has been displayed on the top of the display interface, a height of the first component may be adjusted downward, to collapse the first component downward. For example, when the target toolbar needs to be displayed on a left edge of the display interface or has been displayed on a left edge of the display interface, and the first component also needs to be displayed on the left side of the display interface, a width of the first component may be adjusted rightward, to collapse the first component rightward. For example, when the target toolbar needs to be displayed on a right edge of the display interface or has been displayed on a right edge of the display interface, and the first component also needs to be displayed on the right side of the display interface, a width of the first component may be adjusted leftward, to collapse the first component leftward.

Optionally, when the size of the first component is adjusted, the first content displayed on the first component may be synchronously adjusted. For example, when the height of the first component needs to be adjusted upward, the first content displayed on the first component may be synchronously moved upward. For example, when the height of the first component needs to be adjusted downward, the first content displayed on the first component may be synchronously moved downward.

In another possible implementation, displaying the first component on the display interface includes:
determining a type of the first content; and
when the type of the first content includes a target type, displaying the first component based on a width of the first content.

In the interaction method provided in this implementation, the size of the first component displayed on the display interface may be adaptively adjusted based on the first content. That is, when the type of the first content includes the target type, the width of the first content may be determined. When the width of the first content is greater than a default width of the first component, the width of the first component may be adjusted based on the width of the first content. For example, the width of the first component may be adjusted to be greater than or equal to the width of the first content, so that the first content can be completely displayed on the first component, to facilitate user viewing and improve user experience.

Optionally, the target type is a chart type.

In a possible implementation, after displaying the first component on the display interface, the method further includes:
obtaining a second interaction instruction, where the second interaction instruction is an instruction for starting a first application; and
collapsing the first component based on the second interaction instruction.

In the interaction method provided in this implementation, after the first component is displayed on the display interface, the second interaction instruction may be further detected. The second interaction instruction may be the instruction for starting the first application. When the second interaction instruction is detected, it may be determined that the user currently wants to view content of the first application. In this case, the first component may be collapsed. For example, the first component may be collapsed to a voice bar, to avoid blocking an application interface corresponding to the first application while maintaining sound reception, to help the user view the content of the first application.

In another possible implementation, after displaying the first component on the display interface if the current status is the parking state, the method further includes:
when detecting that the current status is switched from the parking state to the driving state, switching the first component displayed on the display interface to the second component.

In the interaction method provided in this implementation, when the first component is displayed on the display interface, the current status of the vehicle may be obtained in real time. When it is detected that the current status of the vehicle changes from the parking state to the driving state, the larger first component displayed on the display interface may be switched to the smaller second component, to avoid impact of display of excessive content on the display interface on driving behavior, and improve driving safety.

For example, displaying the second component on the display interface includes:
displaying the second component at a middle position of the display interface.

In the interaction method provided in this example, if the current status of the vehicle is the driving state, the second component can be displayed at the middle position of the display interface, that is, the first content is displayed on the smaller second component at the middle position, so that the first content can be visually presented in a shrunk view, to reduce impact of display of content on the second component on driving attention of the driver, and improve driving safety.

Optionally, because the second component has a small size and can display less content, when the first content is displayed on the second component, the first content may be displayed in a streaming word-by-word manner. In other words, in a process of generating the first content, the generated first content may be dynamically displayed on the second component, and the generated first content may be further broadcast by voice. That is, the second component may present a dynamic process of the first content, to ensure transmission efficiency of the first content.

In an example, after displaying the second component on the display interface, the method further includes:
determining the first position of the user in the vehicle when obtaining a third interaction instruction, where the third interaction instruction is an instruction for displaying content in the second component; and
outputting prompt information when the first position is the driver seat, where the prompt information indicates that display of the content in the second component is unachievable; or
when the first position is not the driver seat, switching the second component to the first component, and displaying the first component on the right side of the display interface.

In the interaction method provided in this example, in a process of displaying the second component on the display interface, the third interaction instruction for the second component may be further detected, where the third interaction instruction may be an instruction for displaying detailed content in the second component. When the third interaction instruction is detected, whether to expand the second component may be determined based on the first position of the user in the vehicle, to avoid impact of expanding the second component on driving behavior of the user in the driver seat, and improve driving safety.

Optionally, when the first position is the driver seat, that is, a user currently performing voice interaction with the voice assistant is the user in the driver seat, to avoid impact of expanding excessive content on the driving behavior, the second component may not be expanded, but the prompt information is output. The prompt information may indicate to the user that the content in the second component cannot be currently viewed, to indicate the user to concentrate on driving. When the first position is not the driver seat, that is, a user currently performing voice interaction with the voice assistant is not the user in the driver seat, the second component may be switched to the first component, and the second component may be displayed on the right side of the display interface, to facilitate user interaction.

In a possible implementation, the method further includes:
if obtaining a fourth interaction instruction in a process of generating the first content, responding to the fourth interaction instruction when generating the first content.

In the interaction method provided in this implementation, in a process of generating the first content for being displayed on the first component or the second component, a new interaction instruction (namely, the fourth interaction instruction) may be further detected. The fourth interaction instruction may be an interaction instruction corresponding to a new voice request. When the fourth interaction instruction is detected, the fourth interaction instruction may be concurrently executed in a process of synchronously generating the first content for being displayed on the first component or the second component, to respond to the fourth interaction instruction while maintaining the first content being continuously generated, without interrupting a generation status of current content.

For example, after the fourth interaction instruction is concurrently executed, an execution status of the fourth interaction instruction may not be broadcast by voice, that is, in a process of executing the fourth interaction instruction and after execution of the fourth interaction instruction is completed, the first content may be continuously generated and the first content may be broadcast by voice, so as not to interrupt a generation status and a broadcasting status of the first content.

Optionally, when the fourth interaction instruction is an interaction instruction for adjusting an interface form of the first component or the second component, or when the fourth interaction instruction is an interaction instruction for adjusting a display manner of the first content, in a process of generating the first content for being displayed on the first component or the second component, the fourth interaction instruction may be concurrently executed, and after execution of the fourth interaction instruction is completed, the execution status of the fourth interaction instruction may not be broadcast by voice, that is, the first content may be continuously broadcast by voice.

In another possible implementation, the method further includes:
displaying second content in the second component after display of the first content in the second component is completed, where the second content is content determined based on the first content, or the second content is content fed back based on an execution status of the first interaction instruction.

In the interaction method provided in this implementation, after the second component completes display of the first content, for example, after the second component completes display of the first content in a streaming word-by-word manner, the second content may be displayed in the second component. The second content may be a summary of the displayed first content, or may be a feedback of the execution status of the first interaction instruction, to help the user learn of the execution status of the first interaction instruction, and improve user experience.

For example, the first content is content generated based on first data corresponding to the vehicle, the first data is data generated during use of the vehicle, and the first data is obtained based on the first interaction instruction.

In the interaction method provided in this example, when the first content is generated based on the first interaction instruction, vehicle-related data (namely, the first data) may be obtained, and the first content in response to the first interaction instruction may be generated based on the vehicle-related data, to ensure accuracy of the first content and improve user experience.

Optionally, the first component is a window.

Optionally, the second component is a card.

According to a second aspect, an embodiment of this application provides an interaction apparatus, including:
a status determining module, configured to determine a current status of a vehicle when obtaining a first interaction instruction of a user;
a first display module, configured to display a first component on a display interface if the current status is a parking state; and
a second display module, configured to display a second component on the display interface if the current status is a driving state, where
the second component is smaller than the first component, and first content displayed on the first component or the second component is content in response to the first interaction instruction.

In a possible implementation, the first display module is configured to: determine a first position of the user in the vehicle; and display the first component on the display interface based on the first position.

Optionally, the first display module is further configured to: display the first component on a left side of the display interface when the first position is a driver seat; or display the first component on a right side of the display interface when the first position is not a driver seat.

In another possible implementation, the first display module is further configured to: determine a second position of a target toolbar on the display interface; and display the first component on the display interface based on the second position, where the first component and the target toolbar do not overlap.

In another possible implementation, the first display module is further configured to: determine a type of the first content; and when the type of the first content includes a target type, display the first component based on a width of the first content.

Optionally, the target type is a chart type.

In a possible implementation, the apparatus further includes:
a first instruction obtaining module, configured to obtain a second interaction instruction, where the second interaction instruction is an instruction for starting a first application; and
a component collapsing module, configured to collapse the first component based on the second interaction instruction.

In another possible implementation, the apparatus further includes:
a first component switching module, configured to: when detecting that the current status is switched from the parking state to the driving state, switch the first component displayed on the display interface to the second component.

For example, the second display module is configured to display the second component at a middle position of the display interface.

In an example, the apparatus further includes:
a second instruction obtaining module, configured to: determine the first position of the user in the vehicle when obtaining a third interaction instruction, where the third interaction instruction is an instruction for displaying content in the second component;
a prompt information output module, configured to: output prompt information when the first position is the driver seat, where the prompt information indicates that display of the content in the second component is unachievable; and
a second component switching module, configured to: when the first position is not the driver seat, switch the second component to the first component, and display the first component on the right side of the display interface.

In a possible implementation, the apparatus further includes:
a synchronous response module, configured to: if obtaining a fourth interaction instruction in a process of generating the first content, respond to the fourth interaction instruction when generating the first content.

In another possible implementation, the second display module is further configured to display second content in the second component after display of the first content in the second component is completed, where the second content is content determined based on the first content, or the second content is content fed back based on an execution status of the first interaction instruction.

For example, the first content is content generated based on first data corresponding to the vehicle, the first data is data generated during use of the vehicle, and the first data is obtained based on the first interaction instruction.

Optionally, the first component is a window.

Optionally, the second component is a card.

According to a third aspect, an embodiment of this application provides an electronic device, including a memory, a processor, and a computer program that is stored in the memory and executable on the processor, where when the processor executes the computer program, the electronic device is caused to implement the interaction method according to any one of the implementations of the first aspect.

According to a fourth aspect, an embodiment of this application provides a computer-readable storage medium, where the computer-readable storage medium stores a computer program, and when the computer program is executed by a computer, the computer is caused to implement the interaction method according to any one of the implementations of the first aspect.

According to a fifth aspect, an embodiment of this application provides a computer program product, where when the computer program product runs on an electronic device, the electronic device is caused to perform the interaction method according to any one of the implementations of the first aspect.

It may be understood that, for beneficial effects of the second aspect to the fifth aspect, refer to related descriptions in the first aspect. Details are not described herein again.

### BRIEF DESCRIPTION OF DRAWINGS

FIG. 1 is a diagram of a structure of an electronic device to which an interaction method is applicable according to an embodiment of this application;
FIG. 2 is a diagram of a software architecture to which an interaction method is applicable according to an embodiment of this application;
FIG. 3 is a schematic flowchart of an interaction method according to an embodiment of this application;
FIG. 4 is a diagram 1 of an application scenario according to an embodiment of this application;
FIG. 5 is a diagram 2 of an application scenario according to an embodiment of this application;
FIG. 6 is a diagram 3 of an application scenario according to an embodiment of this application;
FIG. 7 is a diagram 4 of an application scenario according to an embodiment of this application;
FIG. 8 and FIG. 9 are a diagram 5 of an application scenario according to an embodiment of this application; and
FIG. 10 is a diagram 6 of an application scenario according to an embodiment of this application.

### DESCRIPTION OF EMBODIMENTS

It should be understood that the term "include"/"comprise" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in descriptions of the specification of this application and the appended claims, the terms "first", "second", "third", and the like are merely used for distinguishing descriptions, but cannot be understood as indicating or implying relative importance.

Reference to "one embodiment", "some embodiments", or the like described in the specification of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In addition, "a plurality of" mentioned in embodiments of this application should be interpreted as two or more.

Steps in an interaction method provided in embodiments of this application are merely examples. Not all steps are mandatory steps, or not content in each piece of information or a message is mandatory. In a use process, the step or the content may be added or removed based on a requirement. In different embodiments, mutual reference is made to a same step or steps or messages having a same function in embodiments of this application.

A service scenario described in embodiments of this application is intended to describe the technical solutions in embodiments of this application more clearly, and does not constitute a limitation on the technical solutions provided in embodiments of this application. A person of ordinary skill in the art may learn that, with evolution of a network architecture and emergence of a new service scenario, the technical solutions provided in embodiments of this application are also applicable to similar technical problems.

With development of vehicle intelligence, a voice interaction system (also referred to as a voice assistant) is widely applied to vehicles. After waking up the voice assistant by using a specified wake-up word, a user can perform voice interaction with the voice assistant to use a required function. Currently, voice interaction with the voice assistant is primarily based on a streaming word-by-word visual interface. To be specific, during voice interaction, the voice assistant generally returns a large amount of text content for the user to view on a display interface, for example, returns the large amount of text content for the user in a window by displaying the window on the display interface. This manner of returning the large amount of text content in the window is likely to cause a driver to lose concentration, affecting driving safety.

To resolve the foregoing problem, embodiments of this application provide an interaction method, an electronic device, and a computer-readable storage medium. In the method, when obtaining a first interaction instruction of a user, the electronic device can determine a current status of a vehicle. If the current status is a parking state, the electronic device can display a first component on a display interface of the electronic device. If the current status is a driving state, the electronic device can display a second component on a display interface of the electronic device. The second component is smaller than the first component, and first content displayed on the first component or the second component may be content in response to the first interaction instruction. To be specific, in this embodiment of this application, when the first content needs to be displayed on the display interface, if the vehicle is in the parking state, the electronic device can present the first content on the larger first component, to help the user quickly identify and obtain a large amount of information. When the vehicle is in the driving state, the electronic device can present the first content on the smaller second component, so that the first content is presented in a shrunk view, to prevent excessive content from being displayed on the display interface. This avoids affecting driving attention of a driver, improves driving safety, and has strong usability and practicability.

In embodiments of this application, the electronic device may be an electronic device that has a display interface and supports voice interaction, for example, an in-vehicle device, a mobile phone, a tablet computer, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a desktop computer. A specific type of the electronic device is not limited in embodiments of this application.

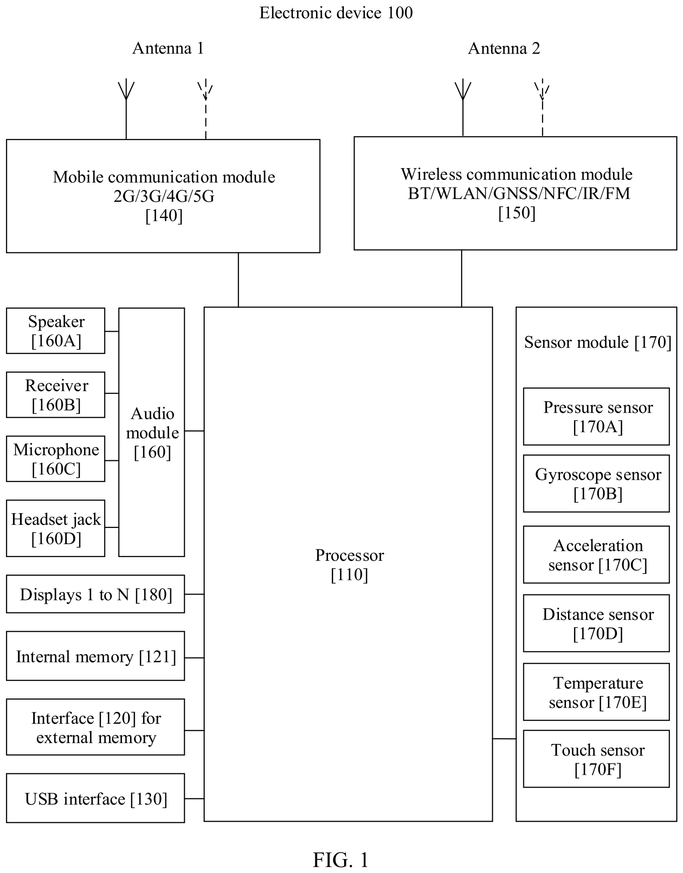

The following first describes the electronic device in embodiments of this application. FIG. 1 is a diagram of a structure of an electronic device 100.

The electronic device 100 may include a processor 110, an interface 120 for external memory, an internal memory 121, a universal serial bus (universal serial bus, USB) interface 130, an antenna 1, an antenna 2, a mobile communication module 140, a wireless communication module 150, an audio module 160, a speaker 160A, a receiver 160B, a microphone 160C, a headset jack 160D, a sensor module 170, a display 180, and the like. The sensor module 170 may include a pressure sensor 170A, a gyroscope sensor 170B, an acceleration sensor 170C, a distance sensor 170D, a temperature sensor 170E, a touch sensor 170F, and the like.

It may be understood that the structure shown in embodiments of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a timing signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be coupled to the touch sensor 170F through the I2C interface, so that the processor 110 communicates with the touch sensor 170F through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 160 through the I2S bus, to implement communication between the processor 110 and the audio module 160. In some embodiments, the audio module 160 may transmit an audio signal to the wireless communication module 150 through the I2S interface, to implement a function of answering a call through a Bluetooth headset.

The PCM interface may also be configured to: perform audio communication, and sample, quantize, and encode an analog signal. In some embodiments, the audio module 160 may be coupled to the wireless communication module 150 through a PCM bus interface. In some embodiments, the audio module 160 may also transmit an audio signal to the wireless communication module 150 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 150. For example, the processor 110 communicates with a Bluetooth module in the wireless communication module 150 through the UART interface, to implement a Bluetooth function. In some embodiments, the audio module 160 may transmit an audio signal to the wireless communication module 150 through the UART interface, to implement a function of playing music through a Bluetooth headset.

The MIPI interface may be configured to connect the processor 110 to a peripheral component like the display 180 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 180 through the DSI interface, to implement a display function of the electronic device 100.

The GPIO interface may be configured by software. The GPIO interface may be configured for a control signal or a data signal. In some embodiments, the GPIO interface may be configured to connect the processor 110 to the display 180, the wireless communication module 150, the audio module 160, the sensor module 170, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to perform data transmission between the electronic device 100 and a peripheral device, or may be configured to connect to a headset for playing audio through the headset. The interface may be further configured to connect to another electronic device, for example, an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communication module 140, the wireless communication module 150, the modem processor, the baseband processor, and the like.

The antenna 1 and the antenna 2 are configured to: transmit and receive an electromagnetic wave signal. Each antenna in the electronic device 100 may be used to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 140 may provide a wireless communication solution that is applied to the electronic device 100 and that includes a 2G/3G/4G/5G or the like. The mobile communication module 140 may include at least one filter, a switch, a power amplifier, a low noise amplifier (low noise amplifier, LNA), and the like. The mobile communication module 140 may receive an electromagnetic wave through the antenna 1, perform processing such as filtering or amplification on the received electromagnetic wave, and transmit the electromagnetic wave to the modem processor for demodulation. The mobile communication module 140 may further amplify a signal modulated by the modem processor, and convert the signal into an electromagnetic wave for radiation through the antenna 1. In some embodiments, at least some functional modules in the mobile communication module 140 may be disposed in the processor 110. In some embodiments, at least some functional modules in the mobile communication module 140 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 160A, the receiver 160B, or the like), or displays an image or a video on the display 180. In some embodiments, the modem processor may be an independent component. In some other embodiments, the modem processor may be independent of the processor 110, and is disposed in a same component as the mobile communication module 140 or another functional module.

The wireless communication module 150 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 150 may be one or more components integrating at least one communication processor module. The wireless communication module 150 receives an electromagnetic wave through the antenna 2, performs frequency modulation and filtering processing on the electromagnetic wave signal, and sends a processed signal to the processor 110. The wireless communication module 150 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 140 are coupled, and the antenna 2 and the wireless communication module 150 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 180, the application processor, and the like. The GPU is a microprocessor for image processing, and is connected to the display 180 and the application processor. The GPU is configured to: perform mathematical and geometric computation, and render an image. The processor 110 may include one or more GPUs that execute program instructions to generate or change displayed information.

The display 180 is configured to display an image, a video, and the like. The display 180 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 180, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more types of video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transmission mode between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external storage card, for example, a micro SD card, to expand a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application necessary to at least one function (for example, a voice playing function or an image playing function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 160, the speaker 160A, the receiver 160B, the microphone 160C, the headset jack 160D, the application processor, and the like.

The audio module 160 is configured to convert digital audio information into an analog audio signal for output, and is also configured to convert an analog audio input into a digital audio signal. The audio module 160 may be further configured to: encode and decode an audio signal. In some embodiments, the audio module 160 may be disposed in the processor 110, or some functional modules in the audio module 160 are disposed in the processor 110.

The speaker 160A, also referred to as a "loudspeaker", is configured to convert an audio electrical signal into a sound signal. The electronic device 100 may be used to listen to music or answer a call in a hands-free mode over the speaker 160A.

The receiver 160B, also referred to as an "earpiece", is configured to convert an audio electrical signal into a sound signal. When a call is answered or voice information is received through the electronic device 100, the receiver 160B may be put close to a human ear to listen to a voice.

The microphone 160C, also referred to as a "mike" or a "mic", is configured to convert a sound signal into an electrical signal. When making a call or sending voice information, a user may make a sound near the microphone 160C through the mouth of the user, to input a sound signal to the microphone 160C. At least one microphone 160C may be disposed in the electronic device 100. In some other embodiments, two microphones 160C may be disposed in the electronic device 100, to capture a sound signal and implement a noise reduction function. In some other embodiments, three, four, or more microphones 160C may alternatively be disposed in the electronic device 100, to capture a sound signal, implement noise reduction, and identify a sound source, so as to implement a directional recording function and the like.

The headset jack 160D is configured to connect to a wired headset. The headset jack 160D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 170A is configured to sense a pressure signal, and can convert the pressure signal into an electrical signal. In some embodiments, the pressure sensor 170A may be disposed on the display 180. There are a plurality of types of pressure sensors 170A, such as a resistive pressure sensor, an inductive pressure sensor, and a capacitive pressure sensor. The capacitive pressure sensor may include at least two parallel plates made of conductive materials. When a force is applied to the pressure sensor 170A, capacitance between electrodes changes. The electronic device 100 determines pressure intensity based on a change in the capacitance. When a touch operation is performed on the display 180, the electronic device 100 detects intensity of the touch operation through the pressure sensor 170A. The electronic device 100 may also calculate a touch location based on a detection signal of the pressure sensor 170A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating a new SMS message is executed.

The gyroscope sensor 170B may be configured to determine a moving posture of the electronic device 100. In some embodiments, an angular velocity of the electronic device 100 around three axes (namely, axes x, y, and z) may be determined through the gyroscope sensor 170B. The acceleration sensor 170C may detect accelerations in various directions (usually on three axes) of the electronic device 100. When the electronic device 100 is still, the acceleration sensor 170C may detect a magnitude and a direction of gravity. The distance sensor 170D is configured to measure a distance. The electronic device 100 may measure the distance in an infrared manner or a laser manner. The temperature sensor 170E is configured to detect a temperature. In some embodiments, the electronic device 100 detects the temperature by using the temperature sensor 170E. The touch sensor 170F is also referred to as a "touch component". The touch sensor 170F may be disposed on the display 180, and the touch sensor 170F and the display 180 constitute a touchscreen, which is also referred to as a "touch screen". The touch sensor 170F is configured to detect a touch operation performed on or near the touch sensor. The touch sensor may transfer the detected touch operation to the application processor to determine a type of a touch event. A visual output related to the touch operation may be provided on the display 180. In some other embodiments, the touch sensor 170F may alternatively be disposed on a surface of the electronic device 100 at a location different from that of the display 180.

A software system of the electronic device 100 may use a layered architecture, an event-driven architecture, a microkernel architecture, a micro service architecture, or a cloud architecture. For example, the software system of the electronic device 100 may use an Android operating system (Operating System, OS), a Harmony operating system (Harmony OS), or an iOS with a layered architecture. In embodiments of this application, an Android system with a layered architecture is used as an example to describe a software structure of the electronic device 100.

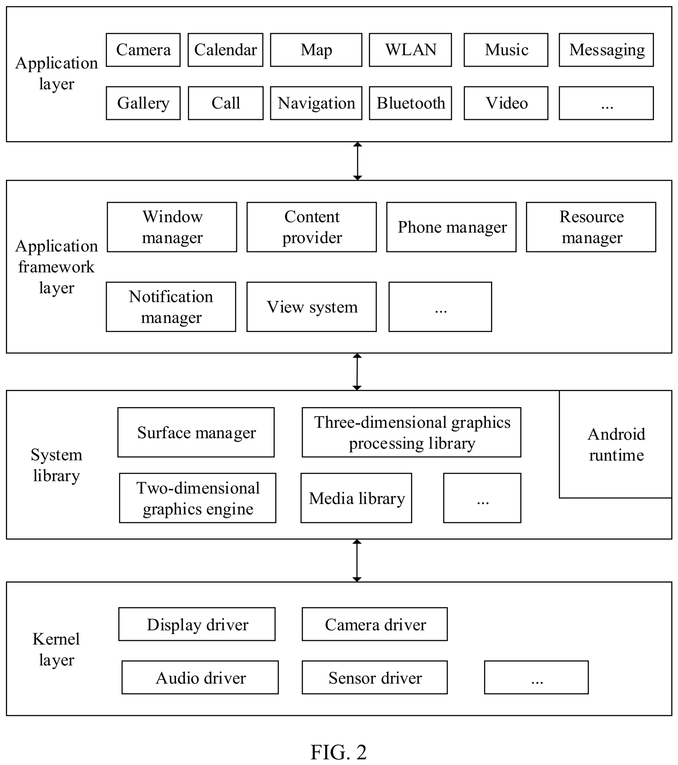

FIG. 2 is a block diagram of the software structure of the electronic device 100 in this embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application package may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a functional function that needs to be called in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to: manage a display subsystem and provide fusion of 2D and 3D layers for a plurality of applications.

The media library supports playing and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes in detail the interaction method provided in embodiments of this application with reference to the accompanying drawings and specific application scenarios.

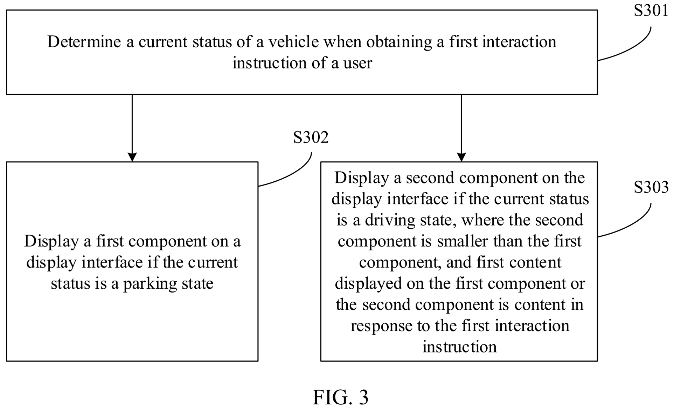

FIG. 3 is a schematic flowchart of an interaction method according to an embodiment of this application. The method may be applied to an electronic device having a display interface. The electronic device may be provided with a voice interaction system (for example, a voice assistant), and a user may start the voice interaction system to perform voice interaction. The following uses an example in which the electronic device is an in-vehicle device and the voice interaction system is the voice assistant for description. As shown in FIG. 3, the method may include the following steps.

S301: Determine a current status of a vehicle when obtaining a first interaction instruction of the user.

S302: Display a first component on the display interface if the current status is a parking state.

S303: Display a second component on the display interface if the current status is a driving state, where the second component is smaller than the first component, and first content displayed on the first component or the second component is content in response to the first interaction instruction.

In this embodiment of this application, when obtaining the first interaction instruction of the user, the in-vehicle device can determine the current status of the vehicle. If the current status is the parking state, the in-vehicle device can display the first component on the display interface of the in-vehicle device. If the current status is the driving state, the in-vehicle device can display the second component on the display interface of the in-vehicle device. The second component is smaller than the first component, and the first content displayed on the first component or the second component may be the content in response to the first interaction instruction. To be specific, in this embodiment of this application, when the vehicle is in the parking state, the in-vehicle device can present the first content on the larger first component, to help the user quickly identify and obtain a large amount of information. When the vehicle is in the driving state, the in-vehicle device can present the first content on the smaller second component, so that the first content is presented in a shrunk view, to prevent excessive content from being displayed on the display interface. This avoids affecting driving attention of a driver and improves driving safety.

For example, the first interaction instruction may be an instruction for requesting execution of a function. For example, the first interaction instruction may be a voice interaction instruction for requesting execution of a function. The first interaction instruction may be an instruction generated based on voice information output by a user in a cockpit of the vehicle, for example, may be an instruction generated based on voice information output by a user in a driver seat, or an instruction generated based on voice information output by a user in a front passenger seat.

Optionally, the first interaction instruction may include a wake-up instruction, or may not include a wake-up instruction. When the first interaction instruction does not include the wake-up instruction, before the first interaction instruction is output, the wake-up instruction needs to be first output to wake up the voice assistant. It should be understood that the wake-up instruction is an instruction for waking up the voice assistant. The wake-up instruction may be specifically set based on an actual scenario. This is not limited in embodiments of this application. For example, the wake-up instruction may be a voice instruction including a preset wake-up word. The preset wake-up word may be customized by the user, or may be set by the in-vehicle device by default. For example, the in-vehicle device may set the preset wake-up word to "Hey Celia" by default. For example, the user may customize the preset wake-up word as "Hey Celia".

It may be understood that, when the first interaction instruction includes the wake-up instruction, after the in-vehicle device obtains the first interaction instruction, the in-vehicle device may wake up the voice assistant, and may display the first component or the second component on the display interface of the in-vehicle device based on the current status of the vehicle, to display, on the first component or the second component, the first content in response to the first interaction instruction.

When the first interaction instruction does not include the wake-up instruction, the in-vehicle device may first obtain the wake-up instruction, to wake up the voice assistant based on the wake-up instruction. After waking up the voice assistant, the in-vehicle device may display a voice bar (which may also be referred to as a voice capsule) at a default position of the display interface. The voice bar may indicate to the user that voice interaction can be performed with the voice assistant by outputting voice information. For example, prompt information "You can speak at any time" may be displayed in the voice bar, to indicate to the user that voice interaction can be performed with the voice assistant by outputting voice information. Subsequently, when obtaining the first interaction instruction, the in-vehicle device may display the first component or the second component based on the current status of the vehicle.

It should be understood that, after waking up the voice assistant based on the first interaction instruction including the wake-up instruction, the in-vehicle device may display the voice bar at the default position of the display interface. Then, the in-vehicle device can determine the current status of the vehicle, and can display the first component or the second component on the display interface of the in-vehicle device based on the current status of the vehicle. Alternatively, after waking up the voice assistant based on the first interaction instruction including the wake-up instruction, the in-vehicle device may not display the voice bar, that is, the in-vehicle device may determine the current status of the vehicle, and may display the first component or the second component on the display interface of the in-vehicle device based on the current status of the vehicle. For example, when the display interface of the in-vehicle device is in a screen-off state, after the in-vehicle device obtains the first interaction instruction including the wake-up instruction, the in-vehicle device may light up the display interface, and may display the first component or the second component on the lit display interface based on the current status of the vehicle.

It should be noted that the default position may be specifically determined based on an actual scenario. This is not limited in embodiments of this application. For example, the default position may be a middle position of the bottom of the display interface, or may be a middle position of the top of the display interface, or may be a middle position on a left side of the display interface, or may be a middle position on a right side of the display interface, or may be a central position of the display interface. The following uses an example in which the default position is the middle position of the bottom of the display interface for description.

For example, the current status of the vehicle may be a current traveling status of the vehicle. Optionally, the current status of the vehicle may include the parking state and the driving state. It may be understood that the parking state may be a state in which the vehicle is parked, for example, the vehicle is in a P (parking) gear. The driving state may be a state in which the vehicle is traveling, or may be a state in which the vehicle is in a non-parking state, for example, a state in which the vehicle is in a non-P gear.

It should be noted that a specific manner of determining the current status of the vehicle is not limited in embodiments of this application, and may be specifically determined based on an actual scenario. For example, the in-vehicle device may obtain current gear information of the vehicle, to determine the current status of the vehicle based on the current gear information of the vehicle. When the vehicle is currently in the P gear, the in-vehicle device may determine that the current status of the vehicle is the parking state. When the vehicle is currently in the non-P gear, the in-vehicle device may determine that the current status of the vehicle is the driving state.

For example, the first component may be a window or another large component on which content can be displayed. The second component may be a card or another small component on which content can be displayed. In other words, the first component is larger than the second component. However, specific forms of the first component and the second component are not limited in embodiments of this application. For example, both the first component and the second component may be windows, where the first component may be a larger window, and the second component may be a smaller window. For example, both the first component and the second component may be cards, where the first component may be a larger card, the second component may be a smaller card, or the like. The following uses an example in which the first component is a window and the second component is a card as an example for description.

Optionally, a width and a height of the first component (for example, a window) may be set by the in-vehicle device by default. To be specific, when the first interaction instruction of the user is obtained, if it is determined that the current status of the vehicle is the parking state, the in-vehicle device may display a window of a default size (namely, a window having a default width and a default height) on the display interface of the vehicle, to display the first content in the window of the default size.

Similarly, a width and a height of the second component (for example, a card) may be set by the in-vehicle device by default. To be specific, when the first interaction instruction of the user is obtained, if it is determined that the current status of the vehicle is the driving state, the in-vehicle device may display a card of a default size (namely, a card having a default width and a default height) on the display interface of the vehicle, to display the first content in the card of the default size. It should be understood that the card of the default size is less than the window of the default size.

For example, when performing voice interaction with the user by using the voice assistant, the in-vehicle device may generate the first content based on the first interaction instruction and through a large language model (large language model, LLM). In a process of generating the first content, the in-vehicle device may broadcast the generated first content by voice and display the generated first content through a text. In other words, when the first content is displayed on the first component or the second component, the in-vehicle device may further broadcast the first content by voice.

It may be understood that the LLM is a generative model, includes an artificial neural network having a large quantity of parameters, and may be obtained through self-supervised learning or semi-supervised learning training. A specific structure and a training process of the LLM are not limited in embodiments of this application, and may be specifically determined based on an actual scenario.

Optionally, in the process of generating the first content through the LLM, the in-vehicle device may display the first content on the first component or the second component in a streaming word-by-word manner. It may be understood that the streaming word-by-word manner means that in the process of generating the first content based on the first interaction instruction and through the LLM, the first content may be generated row by row and downward in an order from left to right based on a reading habit of the user. In other words, the first content displayed on the first component or the second component may be displayed in a word-by-word display manner from left to right and from top to bottom.

Optionally, when the first content is displayed on the first component or the second component in the streaming word-by-word manner, a streaming word-by-word rate may be preset. For example, the streaming word-by-word rate may be set to ≤ 60 milliseconds per word, allowing the user to easily identify streaming word-by-word content. This ensures transfer efficiency of the first content.

For example, when generating the first content based on the first interaction instruction, the in-vehicle device may obtain vehicle-related data, and may generate, based on the vehicle-related data, the first content in response to the first interaction instruction. It may be understood that the vehicle-related data may be specifically determined based on an actual scenario. This is not limited in embodiments of this application. For example, the vehicle-related data may include a mileage of the vehicle, a current temperature of the vehicle, a date of last maintenance for a specific component (for example, an air conditioner filter, an air filter, or an oil warning light of a range extender), or the like.

For example, when the first interaction instruction obtained by the in-vehicle device is "When should the air conditioner filter be maintained?", the in-vehicle device may obtain a mileage of the vehicle or a date of last maintenance for the air conditioner filter of the vehicle, and may determine, based on the mileage of the vehicle or the date of last maintenance for the air conditioner filter of the vehicle, the first content corresponding to the first interaction instruction. For example, the first content may be "The maintenance cycle of the air conditioner filter is every year or every 20,000 kilometers for replacement. Based on your vehicle usage data, you are recommended to replace the air conditioner filter in September 2023 or when the mileage exceeds 20,519 kilometers, whichever comes first. For information about other common maintenance items such as the air filter and the oil warning light of the range extender, refer to the maintenance cycle table."

**The following describes in detail a process of displaying the first component on the display interface if the current status is the parking state in S302.**

In some embodiments, if the current status is the parking state, the in-vehicle device may determine a position (which may be referred to as a first position below) of the user in the vehicle, and may display the first component (for example, a window) on the display interface of the in-vehicle device based on the first position. In other words, after obtaining the first interaction instruction, the in-vehicle device may determine a user who needs to perform voice interaction with the voice assistant, and may display a window at a position close to the user on the display interface. This can facilitate interaction with the user, help the user view the first content displayed in the window, enhance efficiency of viewing the first content by the user, and improve user experience.

For example, when the first position of the user in the vehicle is the driver seat, the in-vehicle device may display the window on a left side of the display interface of the in-vehicle device, to facilitate interaction with the user in the driver seat. When the first position of the user in the vehicle is not the driver seat, the in-vehicle device may display the window on a right side of the display interface of the in-vehicle device.

In an example, the in-vehicle device may determine the first position of the user in the vehicle based on a voice zone corresponding to the first interaction instruction or a voice zone corresponding to the wake-up instruction.

Optionally, to determine a position of a user who outputs the voice information in the cockpit, a voice zone may be set in advance based on seats in the cockpit. Each voice zone may correspond to one or more seats. One or more voice capture apparatuses (for example, a microphone) may be disposed in each voice zone. For each voice zone, voice information in the voice zone may be captured by using a voice capture apparatus in the voice zone, and the captured voice information may be sent to the in-vehicle device. After obtaining voice information sent by a voice capture apparatus, the in-vehicle device may determine, based on a correspondence between the voice capture apparatus and a voice zone, a voice zone corresponding to the voice information, to determine a position of a user who outputs the voice information in the cockpit.

Optionally, after capturing voice information, any voice capture apparatus may determine whether the captured voice information is voice information in a voice zone corresponding to the voice capture apparatus. For example, whether the captured voice information is the voice information in the voice zone corresponding to the voice capture apparatus may be determined by using a method such as sound intensity and a time difference. When the captured voice information is the voice information in the voice zone corresponding to the voice capture apparatus, the voice capture apparatus may send the voice information to the in-vehicle device, so that after obtaining the voice information sent by the voice capture apparatus, the in-vehicle device may determine, based on a correspondence between the voice capture apparatus and the voice zone, the voice zone corresponding to the voice information, so as to determine a position of a user who outputs the voice information in the cockpit. When the captured voice information is not the voice information in the voice zone corresponding to the voice capture apparatus, the voice capture apparatus may not process the voice information. For example, the voice capture apparatus may not send the captured voice information to the in-vehicle device.

For example, when the cockpit includes four seats, four voice zones may be arranged, and the four voice zones respectively correspond to the four seats in the cockpit. For example, a voice zone A corresponds to the driver seat, a voice zone B corresponds to the front passenger seat, a voice zone C corresponds to a rear seat of the driver, and a voice zone D corresponds to a rear seat of the front passenger. A voice capture apparatus A in the voice zone A may capture voice information output from the driver seat, a voice capture apparatus B in the voice zone B may capture voice information output from the front passenger seat, a voice capture apparatus C in the voice zone C may capture voice information output from the rear seat of the driver, and a voice capture apparatus D in the voice zone D may capture voice information output from the rear seat of the front passenger. When voice information (for example, the voice information A) obtained by the in-vehicle device is the voice information sent by the voice capture apparatus A, the in-vehicle device may determine, based on a correspondence between the voice capture apparatus A and the voice area A, that a position of a user who outputs the voice information A is the driver seat. When voice information (for example, the voice information B) obtained by the in-vehicle device is the voice information sent by the voice capture apparatus B, the in-vehicle device may determine, based on a correspondence between the voice capture apparatus B and the voice area B, that a position of a user who outputs the voice information B is the front passenger seat.

It should be understood that determine the first position of the user in the vehicle based on the voice zone corresponding to the first interaction instruction or the voice zone corresponding to the wake-up instruction is merely an example for explanation, and should not be construed as a limitation on embodiments of this application. In this embodiment of this application, the in-vehicle device may alternatively determine the first position of the user in the vehicle in another manner. For example, a microphone array may be disposed in the in-vehicle device, and the in-vehicle device may determine, by positioning a sound source of the microphone array, a position from which the first interaction instruction or the wake-up instruction is output, to determine the first position of the user in the vehicle.

For example, when the in-vehicle device displays a window on the display interface, the window may include a voice bar, a close button, and an adjustment button. For example, the voice bar, the close button, and the adjustment button can be displayed at the top of the window. The voice bar may indicate to the user with prompt information that voice interaction can be performed with the voice assistant by outputting voice information. The close button can be used to close a window. The adjustment button can be used to adjust a size of a window.

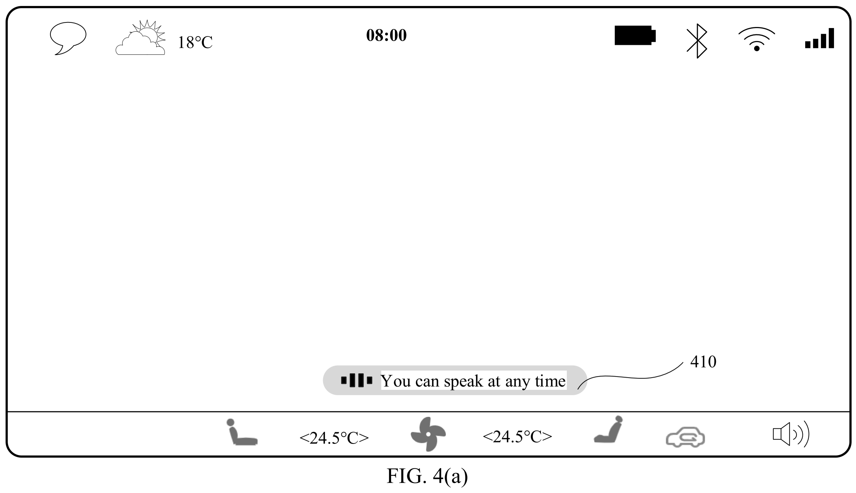

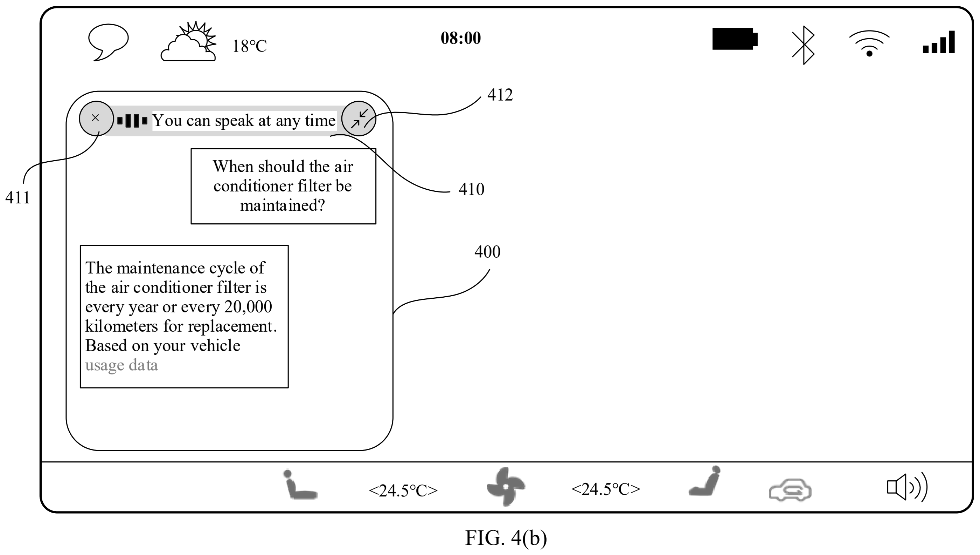

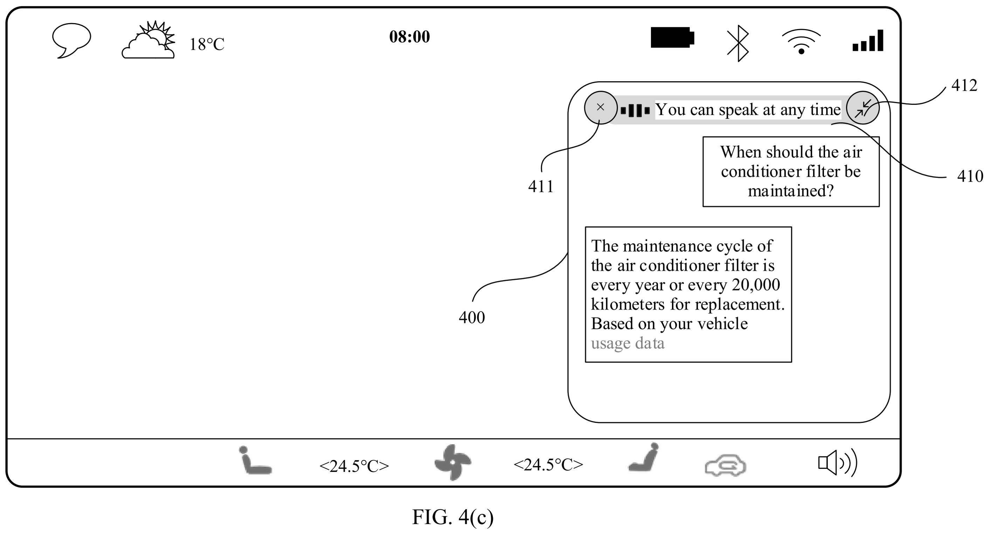

FIG. 4 is a diagram 1 of an application scenario according to an embodiment of this application. In the application scenario, an example in which the first interaction instruction does not include the wake-up instruction is used for description.

As shown in (a) in FIG. 4, after the in-vehicle device is started, the in-vehicle device may display a desktop on the display interface. Information such as time, weather, a signal status, a battery level, and a cockpit temperature may be displayed on the desktop. When detecting the wake-up indication, the in-vehicle device may display a voice bar 410 at a middle position of the bottom of the display interface.

When the voice bar 410 is displayed on the display interface, if the first interaction instruction, for example, a voice instruction "When should the air conditioner filter be maintained?", is obtained, the in-vehicle device may determine the current status of the vehicle, and may generate the first content based on the first interaction instruction. For example, the first content may be "The maintenance cycle of the air conditioner filter is every year or every 20,000 kilometers for replacement. Based on your vehicle usage data, you are recommended to replace the air conditioner filter in September 2023 or when the mileage exceeds 20,519 kilometers, whichever comes first. For information about other common maintenance items such as the air filter and the oil warning light of the range extender, refer to the maintenance cycle table."

When the current status of the vehicle is the parking state, the in-vehicle device may determine the first position of the user in the vehicle.

As shown in (b) in FIG. 4, when the first position of the user in the vehicle is the driver seat, the in-vehicle device may display a window 400 of a default size on the left side of the display interface, and may display the first content in the window 400 in a streaming word-by-word manner in a process of generating the first content.

As shown in (c) in FIG. 4, when the first position of the user in the vehicle is not the driver seat, for example, when the position of the user in the vehicle is the front passenger seat, the in-vehicle device may display a window 400 of a default size on the right side of the display interface, and may display the first content in the window 400 in a streaming word-by-word manner in a process of generating the first content.

As shown in (b) in FIG. 4 and (c) in FIG. 4, the window 400 may further include a voice bar 410, the close button 411, and the adjustment button 412. Prompt information "You can speak at any time" may be displayed in the voice bar 410, to indicate to the user that interaction can be performed with the voice assistant by voice.

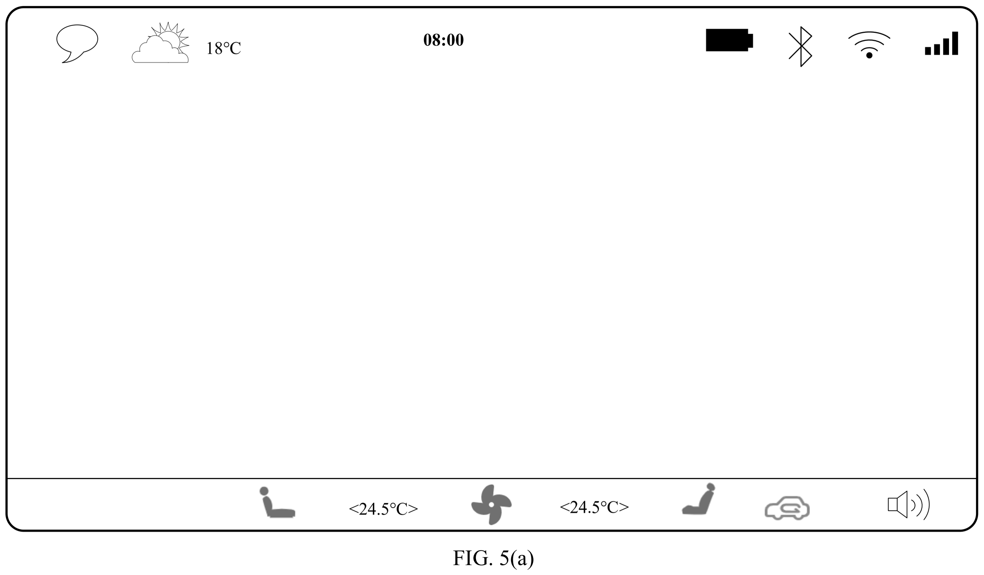

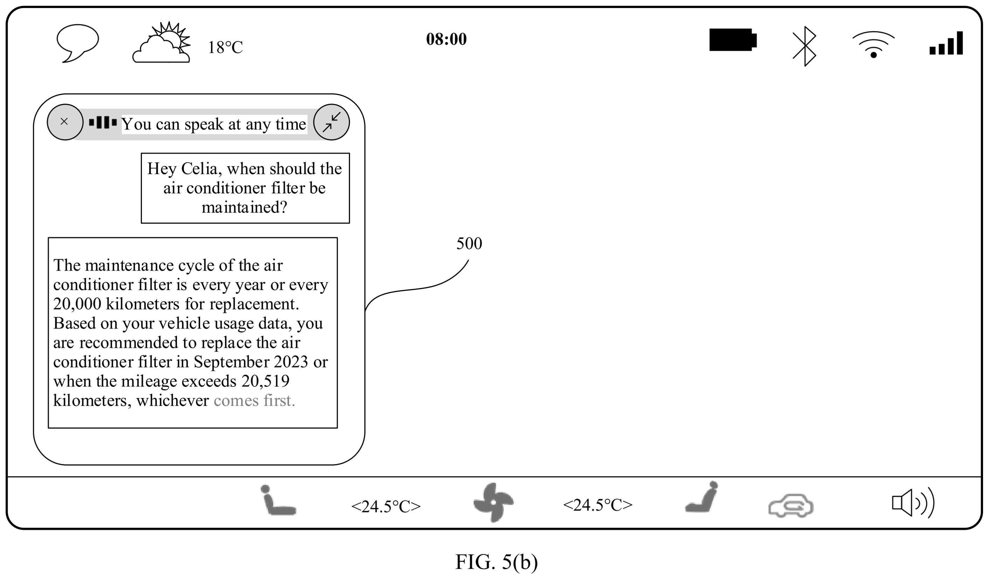

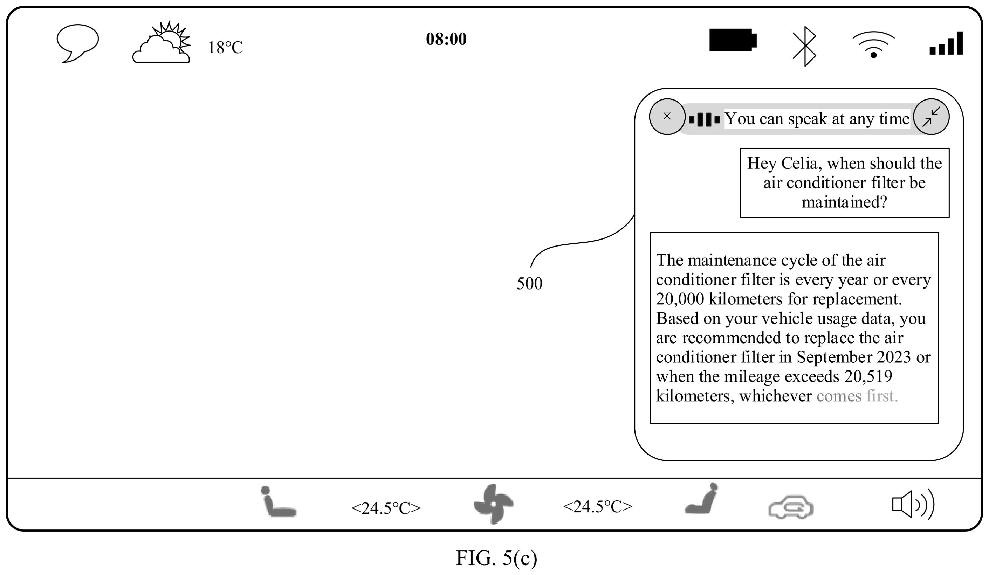

FIG. 5 is a diagram 2 of an application scenario according to an embodiment of this application. In the application scenario, an example in which the first interaction instruction includes the wake-up instruction is used for description.

As shown in (a) in FIG. 5, after the in-vehicle device is started, the in-vehicle device may display a desktop on the display interface. Information such as time, weather, a signal status, a battery level, and a cockpit temperature may be displayed on the desktop.

Then, the in-vehicle device can wake up the voice assistant when obtaining the first interaction instruction including the wake-up instruction, for example, when obtaining a voice instruction "Hey Celia, when should the air conditioner filter be maintained?". In addition, the in-vehicle device may further determine the current status of the vehicle, and may generate the first content based on the first interaction instruction. For example, the first content may be "The maintenance cycle of the air conditioner filter is every year or every 20,000 kilometers for replacement. Based on your vehicle usage data, you are recommended to replace the air conditioner filter in September 2023 or when the mileage exceeds 20,519 kilometers, whichever comes first. For information about other common maintenance items such as the air filter and the oil warning light of the range extender, refer to the maintenance cycle table."

When the current status of the vehicle is the parking state, the in-vehicle device may determine the first position of the user in the vehicle.

As shown in (b) in FIG. 5, when the first position of the user in the vehicle is the driver seat, the in-vehicle device may display a window 500 of a default size on the left side of the display interface, and may display the first content in the window 500 in a streaming word-by-word manner in a process of generating the first content, to facilitate interaction between the user in the driver seat and the window 500.

As shown in (c) in FIG. 5, when the first position of the user in the vehicle is not the driver seat, for example, when the position of the user in the vehicle is the front passenger seat, the in-vehicle device may display a window 500 of a default size on the right side of the display interface, and may display the first content in the window 500 in a streaming word-by-word manner in a process of generating the first content, to facilitate interaction between the user in the front passenger seat or a user in another position and the window 500.

In a possible implementation, a size of a window displayed on the display interface may be adaptively adjusted based on display content existing or to be displayed on the display interface.

In an example, when a target toolbar (for example, a smartdock bar) needs to be displayed on the display interface or a target toolbar has been displayed on the display interface, the in-vehicle device may determine a position of the target toolbar on the display interface (which may be referred to as a second position below), and may adjust a size of the window based on the second position of the target toolbar on the display interface, so that the window and the target toolbar do not overlap, to avoid mutual blocking between the window and the target toolbar, and improve a display effect.

For example, when the target toolbar needs to be displayed at the bottom of the display interface or has been displayed at the bottom of the display interface, the in-vehicle device may adjust a height of the window upward, to collapse the window upward. For example, when the target toolbar needs to be displayed on the top of the display interface or has been displayed on the top of the display interface, the in-vehicle device may adjust a height of the window downward, to collapse the window downward. For example, when the target toolbar needs to be displayed on the left edge of the display interface or has been displayed on the left edge of the display interface, and the window also needs to be displayed on the left side of the display interface, the in-vehicle device may adjust a width of the window rightward, to collapse the window rightward. For example, when the target toolbar needs to be displayed on the right edge of the display interface or has been displayed on the right edge of the display interface, and the window also needs to be displayed on the right side of the display interface, the in-vehicle device may adjust a width of the window leftward, to collapse the window leftward.

Optionally, when the size of the window is adjusted, the first content displayed in the window may be synchronously adjusted. For example, when the height of the window needs to be adjusted upward, the first content displayed in the window may be synchronously moved upward. For example, when the height of the window needs to be adjusted downward, the first content displayed in the window may be synchronously moved downward.

Optionally, when the window is displayed on the display interface, if detecting an operation of triggering display of the target toolbar, the in-vehicle device may determine that the target toolbar needs to be displayed on the display interface. In this case, the in-vehicle device may determine the second position of the target toolbar on the display interface, and adjust the size of the window based on the second position.

It may be understood that the operation of triggering display of the target toolbar may be specifically determined based on an actual scenario. This is not limited in embodiments of this application. For example, the operation of triggering display of the target toolbar may be an operation of sliding upward from a bottom, or may be an operation of sliding downward from a top, or may be an operation of sliding leftward from a right edge, or may be an operation of sliding rightward from a left edge, or may be an operation of double-tapping the display interface with a knuckle.

For example, when an application interface corresponding to an application (for example, an application A) needs to be displayed in full screen on the display interface, the in-vehicle device may collapse the window, for example, may collapse the window into a voice bar, to avoid blocking content on the application interface while maintaining continuous sound reception. This helps the user view content of the application A, and improves user experience.

Optionally, after the window is displayed on the display interface, the in-vehicle device may further detect an interaction instruction (which may be referred to as a second interaction instruction below), where the second interaction instruction may be an instruction for starting an application (which may be referred to as a first application below). If detecting the second interaction instruction, the in-vehicle device may determine that the user currently wants to view content of the first application. In this case, the in-vehicle device may collapse the window based on the second interaction instruction, for example, may collapse the window into a voice bar, to avoid blocking an application interface corresponding to the first application while maintaining sound reception. This helps the user view the content of the first application.

Optionally, after the window is collapsed into the voice bar based on the second interaction instruction, a position of the voice bar on the display interface may be specifically determined based on an actual scenario. This is not limited in embodiments of this application. For example, the position of the voice bar on the display interface may be an original position of the window, or the position of the voice bar on the display interface may be a middle position of the display interface, for example, may be a middle position of the bottom of the display interface.

It should be understood that, in a scenario in which the display interface is screen-split, for example, in a scenario in which the display interface is split into a left screen and a right screen, when detecting the second interaction instruction, the in-vehicle device may determine, based on a position of the window on the display interface, a position (which may be referred to as a position A below) of the first application that the user currently wants to view on the display interface, and may display, at the position A, the application interface corresponding to the first application. For example, when the window is on the left side of the display interface, the in-vehicle device may display, on the right side of the display interface, the application interface corresponding to the first application. When the window is on the right side of the display interface, the in-vehicle device may display, on the left side of the display interface, the application interface corresponding to the first application. In other words, in the screen-split scenario, when detecting the second interaction instruction, the in-vehicle device may display the window and the application interface corresponding to the first application on split screens without collapsing the window, so that the user can interact with the window conveniently without blocking the content of the first application.

It should be noted that the second interaction instruction may be an instruction generated based on any operation such as a touch operation or a tap operation. Alternatively, the second interaction instruction may be a voice interaction instruction. The second interaction instruction is not limited in embodiments of this application, and may be specifically determined based on an actual scenario.

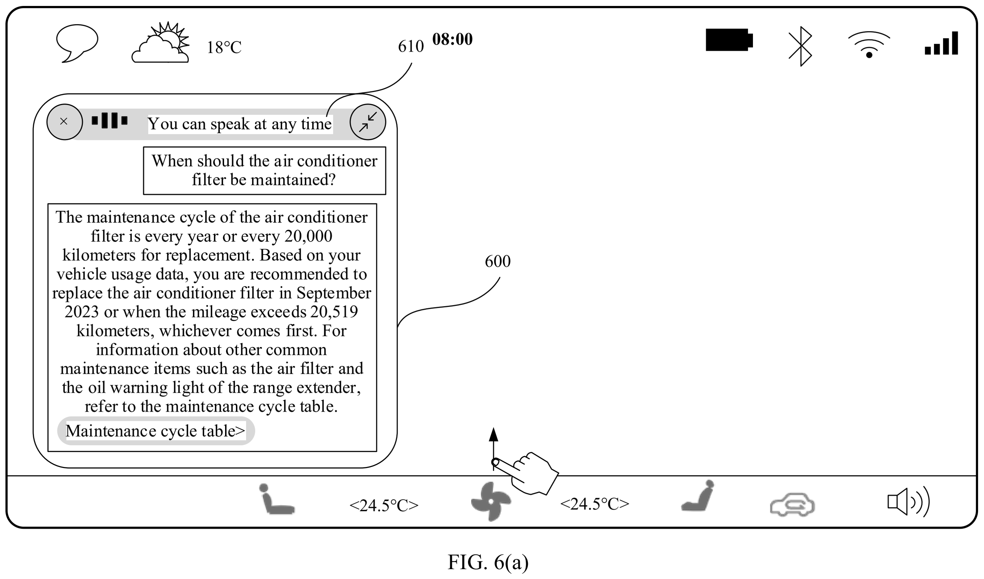

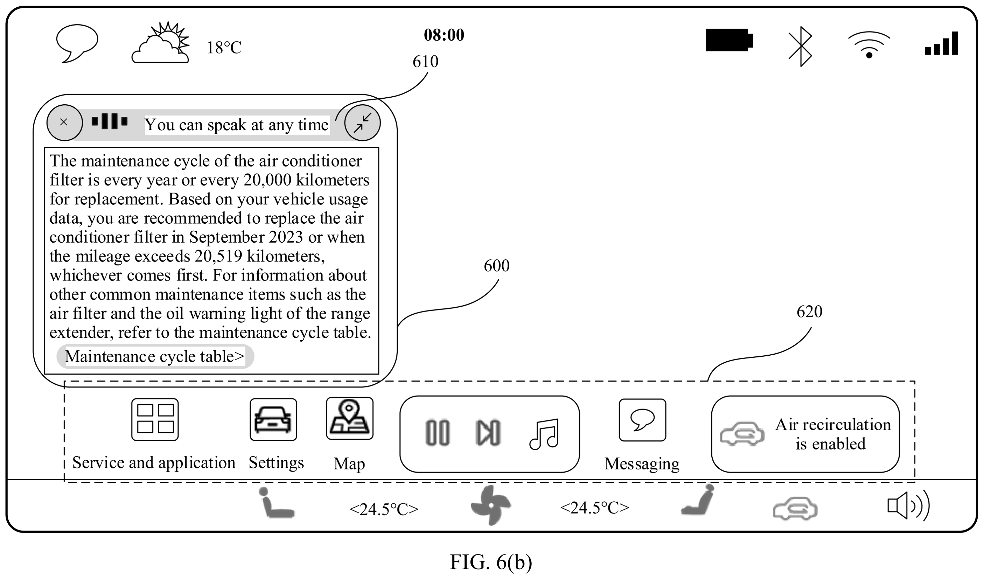

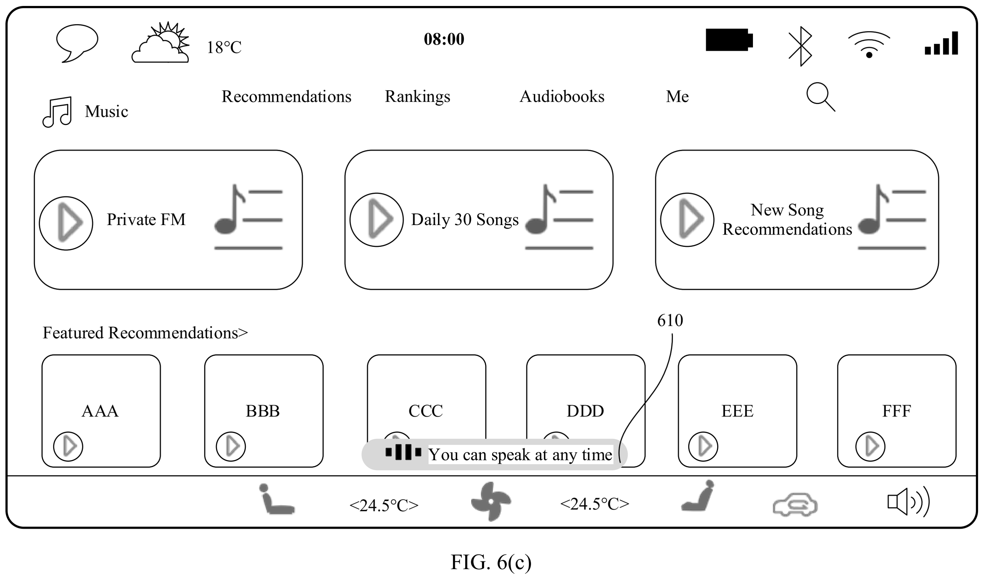

FIG. 6 is a diagram 3 of an application scenario according to an embodiment of this application.

When the first interaction instruction, for example, a voice instruction "When should the air conditioner filter be maintained?", is obtained, the in-vehicle device may determine the current status of the vehicle, and may generate the first content based on the first interaction instruction. For example, the first content may be "The maintenance cycle of the air conditioner filter is every year or every 20,000 kilometers for replacement. Based on your vehicle usage data, you are recommended to replace the air conditioner filter in September 2023 or when the mileage exceeds 20,519 kilometers, whichever comes first. For information about other common maintenance items such as the air filter and the oil warning light of the range extender, refer to the maintenance cycle table."

When the current status of the vehicle is the parking state, the in-vehicle device may determine the first position of the user in the vehicle.

As shown in (a) in FIG. 6, when the first position of the user in the vehicle is the driver seat, if the in-vehicle device determines that no other content is currently displayed on the display interface, the in-vehicle device may display a window 600 of a default size on the left side of the display interface. The first content may be displayed in the window 600. The window 600 may further include a voice bar 610. Prompt information "You can speak at any time" may be displayed in the voice bar 610, to indicate to the user that interaction can be performed with the voice assistant by voice.

As shown in (a) in FIG. 6, when the window 600 is displayed on the display interface, when detecting an operation of sliding upward from a bottom, the in-vehicle device may determine that a target toolbar 620 needs to be displayed on the display interface. It is assumed that the target toolbar 620 needs to be displayed at the bottom of the display interface. As shown in (b) in FIG. 6, the in-vehicle device may display the target toolbar 620 at the bottom of the display interface, and may collapse the window 600 upward, to adjust a height of the window 600, so that the window 600 and the target toolbar 620 do not overlap. In addition, the first content displayed in the window 600 may be synchronously moved upward. For example, the target toolbar 620 may include Service and application, a Settings application, a Map application, an Information application, a play control button, and an application that records an in-vehicle status.

When the window 600 and the target toolbar 620 are displayed on the display interface, if the in-vehicle device detects an operation of starting an application, for example, if the in-vehicle device detects an operation of tapping an icon corresponding to a music application in the target toolbar 620, as shown in (c) in FIG. 6, the in-vehicle device may display, on the display interface, an application interface corresponding to the music application, collapse the window 600 into the voice bar 610, and display the voice bar 610 at a middle position of the bottom of the display interface, to avoid blocking content in the music application while maintaining continuous sound reception by using the voice bar 610. This helps the user view the content in the music application.

In another possible implementation, a size of a window displayed on the display interface may be adaptively adjusted based on the first content. The first content is content generated in response to the first interaction instruction.

For example, the in-vehicle device may determine a type of the first content, and may adjust the size of the window based on the type of the first content.

Optionally, when the type of the first content includes a target type, the in-vehicle device may determine a width of the first content. When the width of the first content is greater than a default width of the window, the in-vehicle device may adjust a width of the window based on the width of the first content. For example, the width of the window may be adjusted to be greater than or equal to the width of the first content, so that the first content can be completely displayed in the window, to facilitate user viewing and improve user experience.

Optionally, the target type may be a chart type, or may be another content type that is unsuitable for re-layout, for example, an image. To be specific, for content that is unsuitable for re-layout, such as a chart or an image, if a width of the content is greater than the default width of the window, when the content is displayed in a window of a default size, the user needs to manually slide the content in the window to the left or right to view complete content, resulting in poor user experience. Therefore, when the type of the first content includes the target type, if it is determined that the width of the first content is greater than the default width of the window, the in-vehicle device may adaptively adjust the width of the window based on the width of the first content, so that the first content can be displayed in the window as completely as possible, to facilitate user viewing and improve user experience.

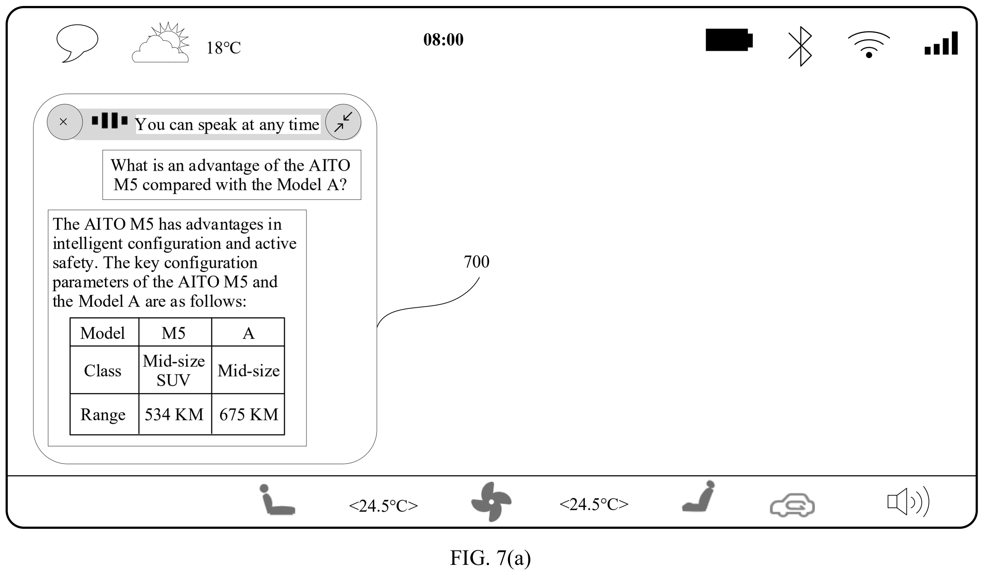

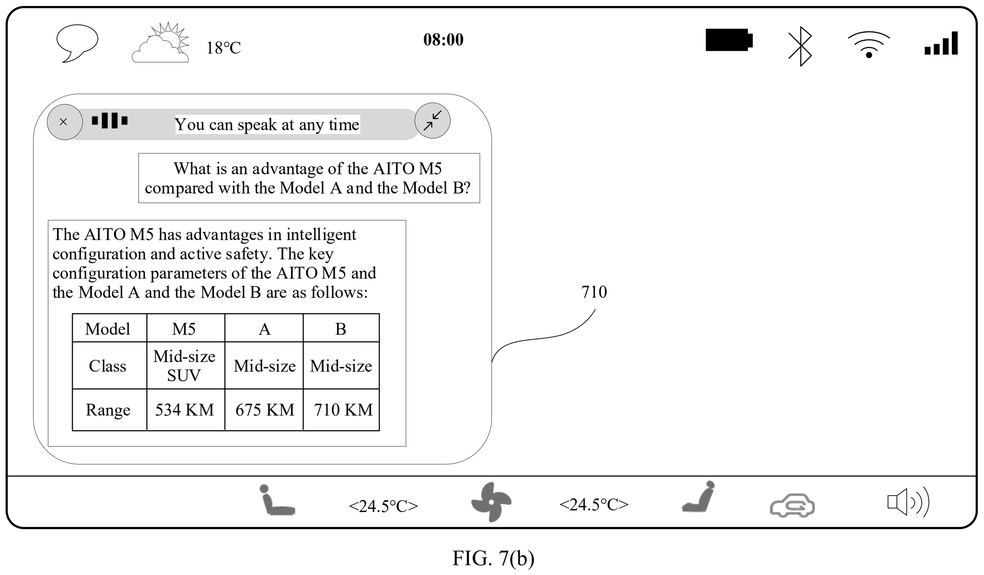

FIG. 7 is a diagram 4 of an application scenario according to an embodiment of this application. In this application scenario, an example in which the current status of the vehicle is the parking state and the first position of the user in the vehicle is the driver seat is used for description.

After the first interaction instruction is obtained, when it is determined that the current status of the vehicle is the parking state, and it is determined that the first position of the user in the vehicle is the driver seat, if the in-vehicle device determines that the type of the generated first content does not include the target type, for example, the first content is text content, as shown in (a) in FIG. 6, the in-vehicle device may display the first content in a window of a default size.

When the in-vehicle device determines that the type of the first content includes a chart type, the in-vehicle device may determine a width of the first content, to adjust a width of the window based on the width of the first content.

As shown in (a) in FIG. 7, when the width of the first content is less than or equal to a default width of a window 700, for example, when the first interaction instruction is an interaction instruction "What is an advantage of the AITO M5 compared with the Model A?", based on the first content generated based on the first interaction instruction, the in-vehicle device may include a key parameter configuration table corresponding to the AITO M5 and the Model A. It is assumed that a width in the key parameter configuration table is less than the default width of the window 700. The in-vehicle device may determine that the first content may be completely displayed in the window 700 of the default size. In this case, the in-vehicle device may not adjust a width of the window 700, that is, the first content may be directly displayed in the window 700 of the default size.

As shown in (b) in FIG. 7, when the width of the first content is greater than a default width of a window 700, for example, when the first interaction instruction is an interaction instruction "What are advantages of the AITO M5 compared with the Model A and the Model B?", based on the first content generated based on the first interaction instruction, the in-vehicle device may include a key parameter configuration table corresponding to the AITO M5, the Model A, and the Model B. It is assumed that a width in the key parameter configuration table is greater than the default width of the window 700. The in-vehicle device may determine that the first content cannot be completely displayed in the window 700 of the default size. In this case, the in-vehicle device may adjust a width of the window 700 based on the width of the first content, for example, may adjust the width of the window 700 to be greater than the width of the first content, so that the first content can be completely displayed in an adjusted window 710. This helps the user view the first content.

Optionally, when the width of the window needs to be adjusted, to ensure a display effect of the display interface, a maximum value of the width may be set, to adjust the width of the window based on the width of the first content and/or the maximum value of the width. To be specific, when the width of the first content is less than or equal to the maximum value of the width, the in-vehicle device may adjust the width of the window based on the width of the first content. When the width of the first content is greater than the maximum value of the width, the in-vehicle device may adjust the width of the window based on the maximum value of the width, so that the width of the window does not exceed the maximum value, to ensure a display effect.

It may be understood that the maximum value of the width may be specifically determined based on an actual application scenario. This is not limited in embodiments of this application. For example, the maximum value may be set by the in-vehicle device by default based on an actual application scenario, or may be set by the user. This is not limited in embodiments of this application.

**The following describes in detail a process of displaying the second component on the display interface if the current status is the driving state in S303.**

In some embodiments, if the current status of the vehicle is the driving state, the in-vehicle device may display the second component (for example, a card) on the display interface, that is, display the first content in the card, to visually minimize presentation of the first content. This reduces impact on driving attention of the driver and improves driving safety.

Optionally, when the first content is displayed in the card, the in-vehicle device may further broadcast the first content by voice, and present the first content in an auditory-based manner and a visual-assisted manner, to reduce impact of excessive visual content on driving behavior, and improve driving safety.

It may be understood that a position of the card on the display interface may be specifically determined based on an actual scenario. This is not limited in embodiments of this application.

In an example, the position of the card on the display interface may be set by the in-vehicle device by default. For example, the in-vehicle device may set, by default, the position of the card on the display interface as a central position of the display interface, that is, the in-vehicle device may display the card at the central position of the display interface. For example, the in-vehicle device may set, by default, the position of the card on the display interface as a middle position of the bottom of the display interface, that is, the in-vehicle device may display the card at the middle position of the bottom of the display interface. For example, the in-vehicle device may set, by default, the position of the card on the display interface as a middle position on the top of the display interface, that is, the in-vehicle device may display the card at the middle position on the top of the display interface.

In another example, the in-vehicle device may determine the position of the card on the display interface based on a first position of the user in the vehicle. For example, when the first position of the user in the vehicle is the driver seat, the in-vehicle device may determine that the position of the card on the display interface is a position on the left side of the display interface, for example, may be any position such as a central position on the left side of the display interface, a middle position of the bottom of the left side of the display interface, or a middle position of the top of the left side of the display interface. For example, when the first position of the user in the vehicle is not the driver seat, for example, when the first position of the user in the vehicle is the front passenger seat, the in-vehicle device may determine that the position of the card on the display interface is a position on the right side of the display interface, for example, may be any position such as a central position on the right side of the display interface, a middle position of the bottom of the right side of the display interface, or a middle position of the top of the right side of the display interface.

Optionally, when displaying the card on the display interface, the in-vehicle device may further display a voice bar at the same time. A position of the voice bar on the display interface may be determined based on the position of the card on the display interface. For example, the position of the voice bar on the display interface may be a position right above the card, that is, the in-vehicle device may display the voice bar right above the card. For example, the position of the voice bar on the display interface may be a position right below the card, that is, the in-vehicle device may display the voice bar right below the card.

Optionally, because the card has a small size and can display less content, when the first content is displayed in the card, the in-vehicle device may display the first content in the streaming word-by-word manner. In other words, in a process of generating the first content, the in-vehicle device may dynamically display the generated first content in the card, and may further broadcast the generated first content by voice. That is, the card may present a dynamic process of the first content, to ensure transmission efficiency of the first content.

Optionally, after display of the first content is completed in the card, for example, after display of the first content is completed in the streaming word-by-word manner, the in-vehicle device may display the second content in the card. The second content may be a summary of the displayed first content, or may be a feedback of an execution status of the first interaction instruction.

For example, in a process of displaying the card on the display interface, the in-vehicle device may detect an interaction instruction (which may be referred to as a third interaction instruction below) for the card, where the third interaction instruction may be an instruction for displaying detailed content in the card. When detecting the third interaction instruction, the in-vehicle device may determine, based on the first position of the user in the vehicle, whether to expand the card.

Optionally, when the first position is the driver seat, that is, a user currently performing voice interaction with the voice assistant is the user in the driver seat, to avoid impact of expanding excessive content on driving behavior, the in-vehicle device may not expand the card, but output prompt information. The prompt information may indicate to the user that content in the card cannot be currently viewed, to indicate the user to concentrate on driving. When the first position is not the driver seat, that is, a user currently performing voice interaction with the voice assistant is not the user in the driver seat, the in-vehicle device may switch the card to a window, and may display the window on the right side of the display interface, to facilitate user interaction.

It may be understood that the third interaction instruction may be an interaction instruction generated by tapping or touching a particular area of the card, or may be a direct voice instruction, or the like. Specific content of the third interaction instruction is not limited in embodiments of this application, and may be determined based on an actual application scenario.

Optionally, the in-vehicle device may output the prompt information in a pop-up window. It should be understood that a position of the pop-up window on the display interface may be specifically determined based on an actual scenario. This is not limited in embodiments of this application.

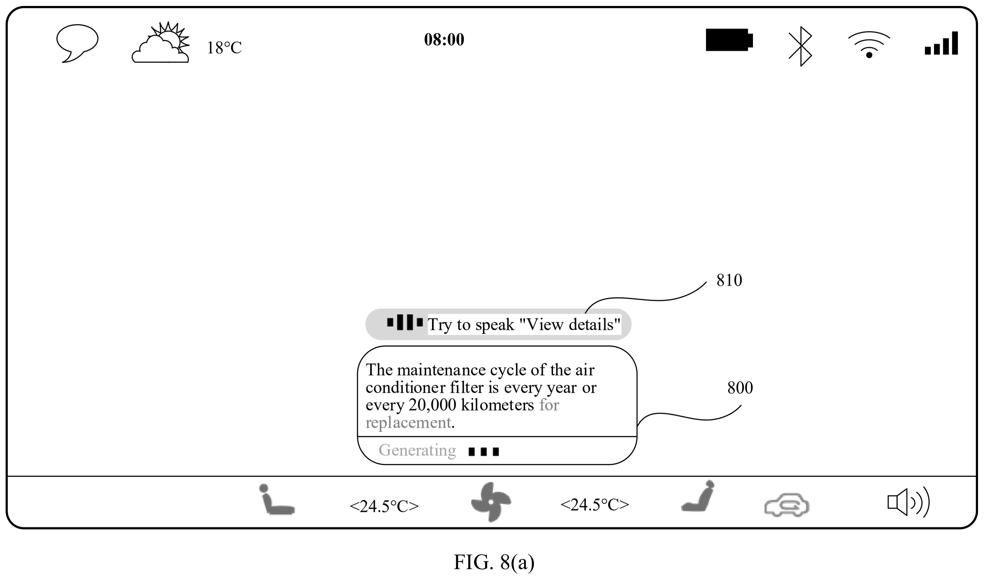

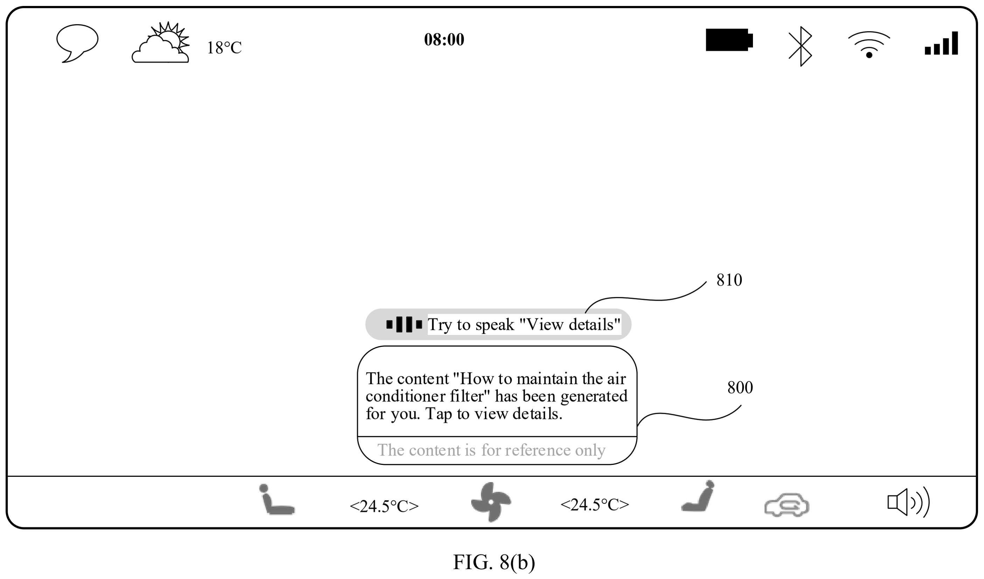

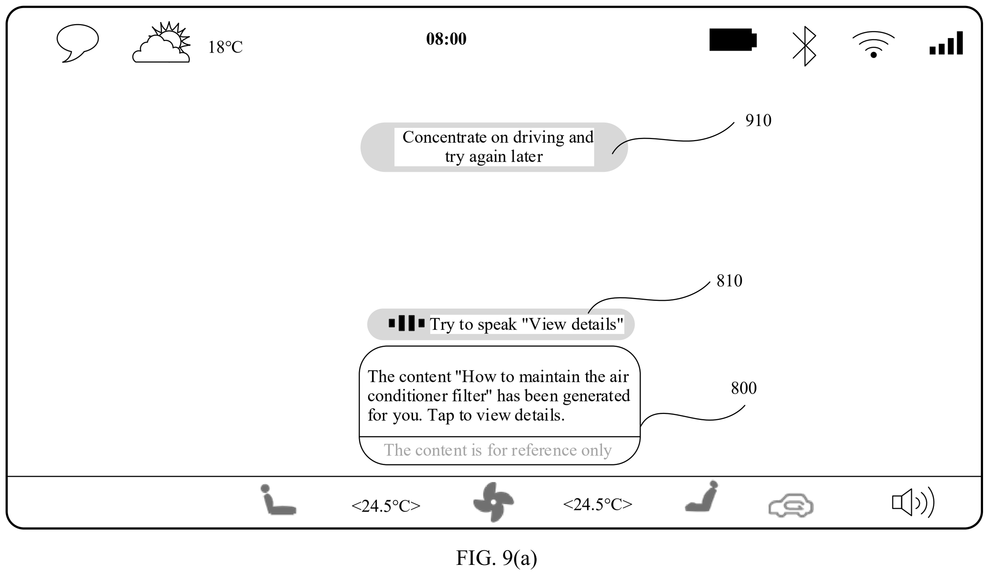

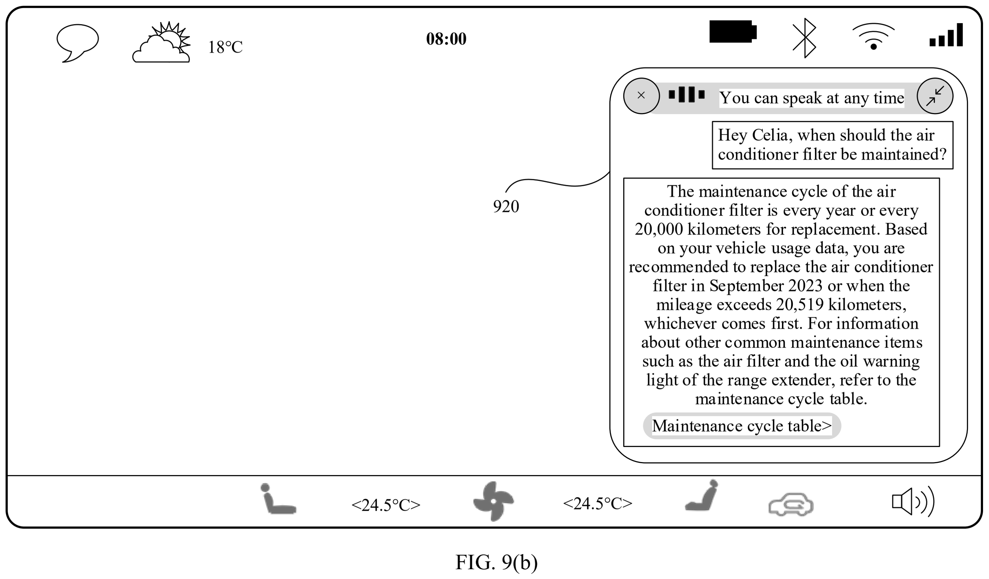

FIG. 8 and FIG. 9 are a diagram 5 of an application scenario according to an embodiment of this application. In this application scenario, an example in which the position of the card on the display interface is the middle position of the bottom of the display interface, and the voice bar is displayed right above the card is used for description.

After the first interaction instruction is obtained, for example, a voice instruction "Hey Celia, when should the air conditioner filter be maintained?" is obtained, the in-vehicle device may determine the current status of the vehicle, and may generate the first content based on the first interaction instruction. For example, the first content may be "The maintenance cycle of the air conditioner filter is every year or every 20,000 kilometers for replacement. Based on your vehicle usage data, you are recommended to replace the air conditioner filter in September 2023 or when the mileage exceeds 20,519 kilometers, whichever comes first. For information about other common maintenance items such as the air filter and the oil warning light of the range extender, refer to the maintenance cycle table."

As shown in (a) in FIG. 8, when the current status of the vehicle is the driving state, the in-vehicle device may display a card 800 at the middle position of the bottom of the display interface, and may display a voice bar 810 right above the card 800. In a process of generating the first content, the card 800 may display the first content in a streaming word-by-word manner. Prompt information "Try to speak to 'View details'" may be displayed in the voice bar 810, to indicate to the user that interaction can be performed with the voice assistant by outputting voice information.

As shown in (b) in FIG. 8, after display of the first content is completed, the in-vehicle device may determine the second content based on the first content or the execution status of the first interaction instruction. For example, the in-vehicle device may determine that the second content is "The content "How to maintain the air conditioner filter" has been generated for you. Tap to view details", and may display the second content in the card 800.

In a process of displaying the card 800 on the display interface, for example, in a process of displaying the second content in the card 800, when detecting a third interaction instruction for viewing detailed content in the card 800, for example, when detecting a tap operation on the card 800 or a voice instruction for "View details", the in-vehicle device may determine the first position of the user in the vehicle.

As shown in (a) in FIG. 9, when the first position of the user in the vehicle is the driver seat, the in-vehicle device may not perform any operation on the card 800, and may display a pop-up window 910 on the display interface. Prompt information "Concentrate on driving and try again later" may be displayed in the pop-up window 910, to indicate to the user that the card cannot be expanded in the driving state.

As shown in (b) in FIG. 9, when the first position of the user in the vehicle is not the driver seat, for example, when the first position of the user in the vehicle is the front passenger seat, the in-vehicle device may switch the card 800 to a window 920, and may display the window 920 on the right side of the display interface. The first content may be displayed in the window 920.

In a possible implementation, in a process of generating the first content for being displayed in the window or the card, the in-vehicle device may further detect a new interaction instruction (which may be referred to as a fourth interaction instruction below). The fourth interaction instruction may be an interaction instruction corresponding to a new voice request. When detecting the fourth interaction instruction, the in-vehicle device may concurrently execute the fourth interaction instruction in a process of synchronously generating the first content for being displayed in the window or the card, to respond to the fourth interaction instruction while maintaining the first content being continuously generated, without interrupting a generation status of current content.

In an example, after concurrently executing the fourth interaction instruction, the in-vehicle device may not broadcast an execution status of the fourth interaction instruction by voice, that is, in a process of executing the fourth interaction instruction and after execution of the fourth interaction instruction is completed, the in-vehicle device may continuously generate the first content and broadcast the first content by voice, so as not to interrupt a generation status and a broadcasting status of the first content.

Optionally, when the fourth interaction instruction is an interaction instruction for adjusting an interface form of the window or the card, or when the fourth interaction instruction is an interaction instruction for adjusting a display manner of the first content, in a process of generating the first content for being displayed in the window or the card, the in-vehicle device may concurrently execute the fourth interaction instruction, and after execution of the fourth interaction instruction is completed, the in-vehicle device may not broadcast the execution status of the fourth interaction instruction, that is, may continuously broadcast the first content by voice.

It may be understood that adjusting the interface form of the window or the card may include adjusting a size of the window or the card, for example, may include switching the card to the window, or switching the window to the card; and adjusting the display manner of the first content may include highlighting a part of content in the first content and the like.

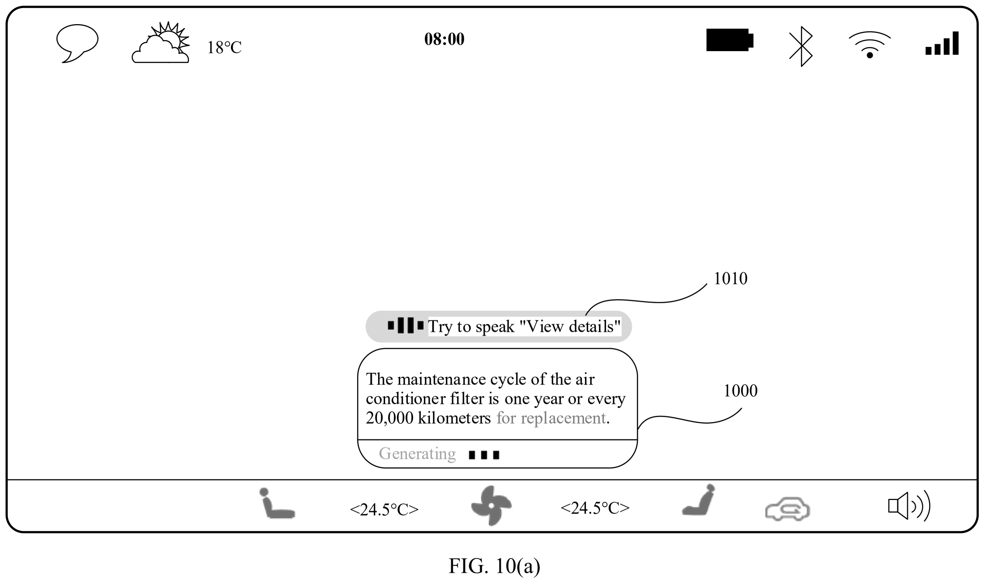

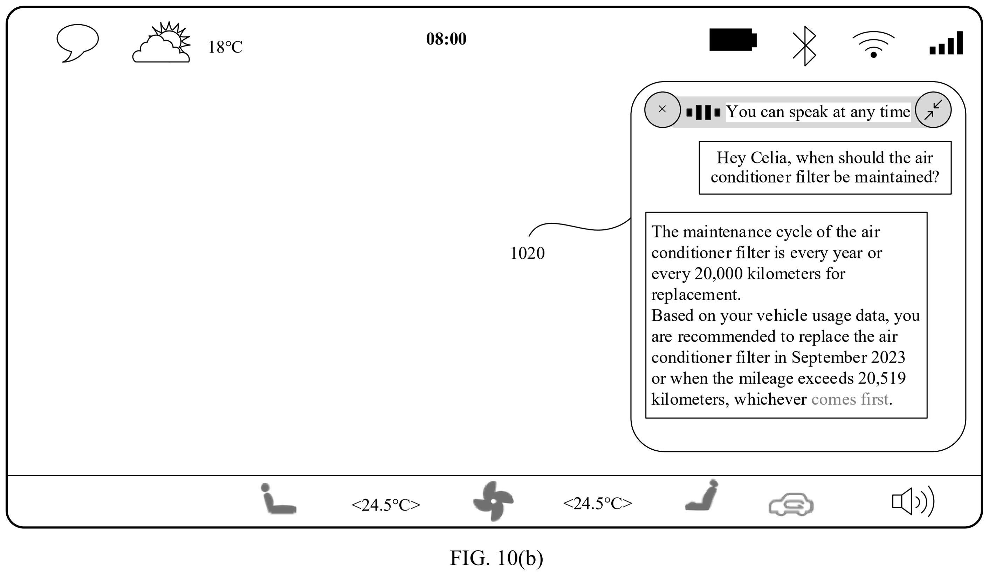

FIG. 10 is a diagram 6 of an application scenario according to an embodiment of this application.

After the first interaction instruction, for example, "Hey Celia, when should the air conditioner filter be maintained?", is obtained, the in-vehicle device may determine the current status of the vehicle, and may generate the first content based on the first interaction instruction. For example, the first content may be "The maintenance cycle of the air conditioner filter is every year or every 20,000 kilometers for replacement. Based on your vehicle usage data, you are recommended to replace the air conditioner filter in September 2023 or when the mileage exceeds 20,519 kilometers, whichever comes first. For information about other common maintenance items such as the air filter and the oil warning light of the range extender, refer to the maintenance cycle table."

As shown in (a) in FIG. 10, when the current status of the vehicle is the driving state, the in-vehicle device may display a card 1000 on the display interface, and may display a voice bar 1010 right above the card 1000. In a process of generating the first content, the in-vehicle device may display the first content in the card 1000, and may broadcast the first content by voice.

In a process of displaying the first content in the card 1000, if detecting a fourth interaction instruction "View details", the in-vehicle device may determine the first position of the user in the vehicle.

As shown in (b) in FIG. 10, when the first position of the user in the vehicle is not the driver seat, the in-vehicle device may switch the card 1000 to a window 1020 while maintaining generation and broadcasting of the first content, and may continue to generate and display the first content in the window 1020. When switching the card 1000 to the window 1020, the in-vehicle device may not broadcast the switching status by voice, so as not to interrupt generation and broadcasting of the first content. This ensures continuous generation and broadcasting of the first content.

It may be understood that, when it is determined that the first position of the user in the vehicle is the driver seat, that is, when it is determined that the user performing voice interaction with the voice assistant is the user in the driver seat, the in-vehicle device may display a pop-up window on the display interface while continuing to generate and broadcast the first content. Prompt information "Concentrate on driving and try again later" may be displayed in the pop-up window, to indicate the user in the driver seat to concentrate on driving, so as to improve driving safety.

In another example, after concurrently executing the fourth interaction instruction, the in-vehicle device may broadcast an execution status of the fourth interaction instruction by voice, and may continue to broadcast the first content after broadcasting the execution status of the fourth interaction instruction. That is, when concurrently executing the fourth interaction instruction, the in-vehicle device may continue to generate and broadcast the first content. After executing the fourth interaction instruction, the in-vehicle device may continue to generate the first content, and may broadcast the execution status of the fourth interaction instruction by voice. After the execution status of the fourth interaction instruction is broadcast by voice, the in-vehicle device may continue to broadcast the first content by voice.

For example, after obtaining the first interaction instruction "When should the air conditioner filter be maintained?", the in-vehicle device may generate the first content based on the first interaction instruction. It is assumed that the first content is "The maintenance cycle of the air conditioner filter is every year or every 20,000 kilometers for replacement. Based on your vehicle usage data, you are recommended to replace the air conditioner filter in September 2023 or when the mileage exceeds 20,519 kilometers, whichever comes first. For information about other common maintenance items such as the air filter and the oil warning light of the range extender, refer to the maintenance cycle table." In a process in which the in-vehicle device generates the first content, the in-vehicle device may display the first content in a streaming word-by-word manner.

It is assumed that when the in-vehicle device determines, based on the current status of the vehicle and the first position of the user in the vehicle, to display the window on the left side of the display interface, the in-vehicle device may display the window on the left side of the display interface, so that in a process of generating the first content, the generated first content may be displayed in the window, and the generated first content may be broadcast by voice.

In a process of displaying the first content in the window, if the fourth interaction instruction "Open the window of the driver seat" is detected, the in-vehicle device may perform an action of opening the window of the driver seat while maintaining generation of the first content, and broadcast an execution status of the fourth interaction instruction by voice. For example, if the window of the driver seat is opened, the in-vehicle device may broadcast "Opened" by voice, or may broadcast "The window of the driver seat is opened for you" by voice. After executing the fourth interaction instruction, the in-vehicle device may continue to display the first content in the window, and may continue to broadcast the generated first content by voice.

In another possible implementation, when the window or the card is displayed on the display interface, the in-vehicle device may further obtain the current status of the vehicle in real time. When detecting that the current status of the vehicle changes, the in-vehicle device may display the first content based on the changed current status.

For example, when the current status of the vehicle changes from the parking state to the driving state, the in-vehicle device may switch the window displayed on the display interface to the card, to avoid impact of display of excessive content on the display interface on driving behavior, and improve driving safety. For example, when the current status of the vehicle changes from the driving state to the parking state, the in-vehicle device may switch the card displayed on the display interface to the window, or the in-vehicle device may still display the first content in the window.

It may be understood that automatic switching between the window and the card based on a change of the current status of the vehicle is merely an example for explanation, and should not be construed as a limitation on embodiments of this application. In this embodiment of this application, when the current status of the vehicle changes, the in-vehicle device may not perform switching between the window and the card. To be specific, after the window is displayed on the display interface based on the first interaction instruction, if the current status of the vehicle changes, the in-vehicle device may still display the window on the display interface, and does not automatically switch the window to the card. Alternatively, after the card is displayed on the display interface based on the first interaction instruction, if the current status of the vehicle changes, the in-vehicle device may still display the card on the display interface, and does not automatically switch the card to the window.

Alternatively, the in-vehicle device may perform switching between the window and the card only when the current status of the vehicle changes from the parking state to the driving state, to reduce impact of display of excessive content on driving behavior and ensure driving safety. To be specific, after the window is displayed on the display interface based on the first interaction instruction, if the current status of the vehicle changes, the in-vehicle device may switch the window on the display interface to the card. After the card is displayed on the display interface based on the first interaction instruction, if the current status of the vehicle changes, the in-vehicle device may still display the card on the display interface, and does not automatically switch the card to the window.

In this embodiment of this application, when obtaining the first interaction instruction of the user, the in-vehicle device can determine the current status of the vehicle. If the current status is the parking state, the in-vehicle device can display the first component on the display interface of the in-vehicle device. If the current status is the driving state, the in-vehicle device can display the second component on the display interface of the in-vehicle device. The second component is smaller than the first component, and the first content displayed on the first component or the second component may be the content in response to the first interaction instruction. To be specific, in this embodiment of this application, when the vehicle is in the parking state, the in-vehicle device can present the first content on the larger first component, to help the user quickly identify and obtain a large amount of information. When the vehicle is in the driving state, the in-vehicle device can present the first content on the smaller second component, so that the first content is presented in a shrunk view, to prevent excessive content from being displayed on the display interface. This avoids affecting driving attention of a driver and improves driving safety.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Corresponding to the interaction method in the foregoing embodiment, an embodiment of this application further provides an interaction apparatus. Modules of the apparatus may correspondingly implement steps of the interaction method.

It should be noted that content such as information exchange and execution processes between the foregoing apparatuses/units are based on a same concept as those in the method embodiments of this application. For specific functions and brought technical effect of the foregoing apparatuses/units, refer to the method embodiments. Details are not described herein again.

A person skilled in the art may clearly understand that, for the purpose of convenient and brief description, division into the foregoing functional units and modules is merely used as an example for description. In an actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes at least one memory, at least one processor, and a computer program that is stored in the at least one memory and that may be run on the at least one processor. When the processor executes the computer program, the electronic device is caused to implement the steps in any one of the foregoing method embodiments. For example, a structure of the electronic device may be shown in FIG. 1.

An embodiment of this application further provides a computer-readable storage medium, where the computer-readable storage medium stores a computer program, and when the computer program is executed by a computer, the computer is caused to implement the steps in any one of the foregoing method embodiments.

An embodiment of this application further provides a computer program product, where when the computer program product runs on an electronic device, the electronic device is caused to implement the steps in any one of the foregoing method embodiments.

When an integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable storage medium may include at least any entity or apparatus that can carry the computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk drive, a magnetic disk, or an optical disc. In some jurisdictions, the computer-readable storage medium cannot be an electrical carrier signal or a telecommunication signal according to legislation and patent practices.

In the foregoing embodiments, descriptions of each embodiment have respective focuses. For a part that is not described in detail or recorded in an embodiment, refer to related descriptions in another embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the purpose of the solutions of embodiments.

The foregoing embodiments are merely intended to describe the technical solutions of this application, but are not to limit this application. Although this application is described in detail with reference to the foregoing embodiments, a person of ordinary skill in the art should understand that modifications may be still made to the technical solutions described in the foregoing embodiments or equivalent replacements may be made to some technical features thereof, without departing from the spirit and scope of the technical solutions of embodiments of this application, and these modifications and replacements shall fall within the protection scope of this application.

## Claims

1. An interaction method, comprising:
determining a current status of a vehicle when obtaining a first interaction instruction of a user; and
displaying a first component on a display interface if the current status is a parking state; or
displaying a second component on the display interface if the current status is a driving state, wherein
the second component is smaller than the first component, and first content displayed on the first component or the second component is content in response to the first interaction instruction.

2. The method according to claim 1, wherein displaying the first component on the display interface comprises:
determining a first position of the user in the vehicle; and
displaying the first component on the display interface based on the first position.

3. The method according to claim 2, wherein displaying the first component on the display interface based on the first position comprises:
displaying the first component on a left side of the display interface when the first position is a driver seat; or
displaying the first component on a right side of the display interface when the first position is not a driver seat.

4. The method according to any one of claims 1 to 3, wherein displaying the first component on the display interface comprises:
determining a second position of a target toolbar on the display interface; and
displaying the first component on the display interface based on the second position, wherein the first component and the target toolbar do not overlap.

5. The method according to any one of claims 1 to 4, wherein displaying the first component on the display interface comprises:
determining a type of the first content; and
when the type of the first content comprises a target type, displaying the first component based on a width of the first content.

6. The method according to claim 5, wherein the target type is a chart type.

7. The method according to any one of claims 1 to 6, wherein after displaying the first component on the display interface, the method further comprises:
obtaining a second interaction instruction, wherein the second interaction instruction is an instruction for starting a first application; and
collapsing the first component based on the second interaction instruction.

8. The method according to any one of claims 1 to 7, wherein after displaying the first component on the display interface if the current status is the parking state, the method further comprises:
when detecting that the current status is switched from the parking state to the driving state, switching the first component displayed on the display interface to the second component.

9. The method according to any one of claims 1 to 8, wherein displaying the second component on the display interface comprises:
displaying the second component at a middle position of the display interface.

10. The method according to any one of claims 1 to 9, wherein after displaying the second component on the display interface, the method further comprises:
determining the first position of the user in the vehicle when obtaining a third interaction instruction, wherein the third interaction instruction is an instruction for displaying content in the second component; and
outputting prompt information when the first position is the driver seat, wherein the prompt information indicates that display of the content in the second component is unachievable; or
when the first position is not the driver seat, switching the second component to the first component, and displaying the first component on the right side of the display interface.

11. The method according to any one of claims 1 to 10, wherein the method further comprises:
if obtaining a fourth interaction instruction in a process of generating the first content, responding to the fourth interaction instruction when generating the first content.

12. The method according to any one of claims 1 to 11, wherein the method further comprises:
displaying second content in the second component after display of the first content in the second component is completed, wherein the second content is content determined based on the first content, or the second content is content fed back based on an execution status of the first interaction instruction.

13. The method according to any one of claims 1 to 12, wherein the first content is content generated based on first data corresponding to the vehicle, the first data is data generated during use of the vehicle, and the first data is obtained based on the first interaction instruction.

14. The method according to any one of claims 1 to 13, wherein the first component is a window.

15. The method according to any one of claims 1 to 14, wherein the second component is a card.

16. An electronic device, comprising a memory, a processor, and a computer program that is stored in the memory and executable on the processor, wherein when the processor executes the computer program, the electronic device is caused to implement the interaction method according to any one of claims 1 to 15.

17. A computer-readable storage medium, wherein the computer-readable storage medium stores a computer program, and when the computer program is executed by a computer, the computer is caused to implement the interaction method according to any one of claims 1 to 15.

18. A computer program product, wherein when the computer program product runs on an electronic device, the electronic device is caused to perform the interaction method according to any one of claims 1 to 15.
